# EUROPEAN PATENT APPLICATION

(11) **EP 4 261 263 A1**
(43) Date of publication of application: **18.10.2023**
(21) Application number: 21903153.1
(22) Date of filing: 19.11.2021
(51) Int. Cl.: C09K 3/00

(54) **HYDROPHILIZING AGENT COMPOSITION FOR HARD SURFACES**

(30) Priority: 09.12.2020 JP 2020203875
(71) Applicant: Kao Corporation, Chuo-ku Tokyo 103-8210 (JP)
(72) Inventor: MENDORI Akari, Tokyo 131-8501 (JP); SAITO Takanori, Tokyo 131-8501 (JP)
(74) Representative: Hoffmann Eitle
(86) International application number: PCT/JP2021/042569
(87) International publication number: WO 2022/124049

(57) **Abstract**

Provided are a hydrophilizing agent composition for hard surfaces and a method for hydrophilizing a hard surface capable of imparting hydrophilicity to hard surfaces and excellent in rinsing durability to maintain hydrophilicity of hard surfaces even after rinses with water several times. A hydrophilizing agent composition for hard surfaces containing, (A) an internal olefin sulfonate with 18 carbons, (B) a polymer having a cationic group and water.

## Description

### Field of the Invention

The present invention relates to a hydrophilizing agent composition for hard surfaces and a method for hydrophilizing a hard surface.

### Background of the Invention

With hydrophilization treatments of hard surfaces, in other words, treatments for reducing the water contact angles of hard surfaces to make the hard surfaces easily get wet with water, effects such as, for example, antifogging effects on glass, mirrors or the like, prevention of static buildup, frost prevention on aluminum fins of heat exchangers or the like can be expected after the treatments.

JP-A 2020-132853 discloses a hydrophilization treatment agent composition comprising (A) a branched anionic surfactant, (B) a di-long chain hydrocarbon cationic surfactant, and water, wherein a molar ratio of (B) to a total of (A) and (B), (B)/[(A) + (B)], is 0.1 or more and 0.8 or less.

JP-A 2020-125451 discloses a hydrophilization treatment agent composition comprising (A) a branched-type anionic surfactant, (B) a polyvalent metal ion, and water, wherein a molar ratio between (A) and (B), (B)/(A), is 0.01 or more and 10 or less.

JP-A 2019-99740 discloses a detergent composition for textile products comprising, (A) an anionic surfactant having a structure in which a hydrophilic group selected from sulfonates and sulfates is bonded to a carbon atom at position 2 or subsequent positions of an aliphatic hydrocarbon with 16 or more and 24 or less carbons, and (B) a soil releasing agent.

JP-A 2014-76983 discloses an aqueous hair cleansing agent comprising the following components (A), (B) and (C) and water and having a pH of 2 to 5 at 25°C when diluted 20-fold by mass with water: (A) an internal olefin sulfonate; (B) a specific organic solvent; and (C) an organic carboxylic acid selected from the group consisting of hydroxymonocarboxylic acids and dicarboxylic acids.

### Summary of the Invention

The present invention provides a hydrophilizing agent composition for hard surfaces and a method for hydrophilizing a hard surface capable of imparting hydrophilicity to hard surfaces and excellent in rinsing durability to maintain hydrophilicity of hard surfaces even after rinses with water several times.

The present invention relates to a hydrophilizing agent composition for hard surfaces containing, (A) an internal olefin sulfonate with 18 carbons (hereinafter referred to as component (A)), (B) a polymer having a cationic group (hereinafter referred to as component (B)) and water.

Further, the present invention relates to a method for hydrophilizing a hard surface including bringing a treatment liquid into contact with the hard surface, the treatment liquid containing, component (A), component (B) and water.

Further, the present invention relates to a method for maintaining hydrophilicity of a hard surface including bringing a treatment liquid into contact with the hard surface, the treatment liquid containing, component (A), component (B) and water.

According to the present invention, provided are a hydrophilizing agent composition for hard surfaces and a method for hydrophilizing a hard surface capable of imparting hydrophilicity to hard surfaces and excellent in rinsing durability to maintain hydrophilicity of hard surfaces even after rinses with water several times.

### Embodiments of the Invention

### [Hydrophilizing agent composition for hard surfaces]

The reason why the hydrophilizing agent composition for hard surfaces of the present invention is capable of imparting hydrophilicity to hard surfaces and excellent in rinsing durability is not wholly certain, but it is inferred to be as follows. It is inferred that a film formed by components (A) and (B) on hard surfaces in which component (A) is an internal olefin sulfonate with a specific number of carbons is adsorbed to the hard surfaces at multiple points owing to electrostatic attraction force of a cationic group of component (B) and a polymer of component (B), thereby forming a strong film to be a hydrophilic film difficult to rinse with water.

### <Component (A)>

Component (A) is an internal olefin sulfonate with 18 carbons. Hereinafter, internal olefin sulfonates are sometimes referred to as IOS.

This carbon number is expressed in terms of the carbon number of the compound in acid form. Examples of component (A) include alkali metal salts, alkaline earth metal (1/2 atom) salts, ammonium salts or organic ammonium salts. Examples of the alkali metal salts include a sodium salt and a potassium salt. Examples of the alkaline earth metal salts include a calcium salt and a magnesium salt. Examples of the organic ammonium salts include alkanol ammonium salts with 2 or more and 6 or less carbons. Component (A) is preferably an alkali metal salt and more preferably a potassium salt from the viewpoint of improving hydrophilizing performance.

Component (A) of the present invention can be obtained by carrying out sulfonation, neutralization and hydrolysis or the like of internal olefins whose olefin chains have a double bond internally (at position 2 or subsequent positions). The sulfonation of internal olefins quantitatively produces β-sultones, and part of the β-sultones changes into γ-sultones and olefin sulfonic acids, which further convert into hydroxy alkane sulfonates (H species) and olefin sulfonates (O species) in the neutralization and hydrolysis processes (for example, J. Am. Oil Chem. Soc. 69, 39 (1992)). Component (A) is a mixture of them, and is mainly sulfonates whose hydrocarbon chains (hydroxy alkane chains in H species or olefin chains in O species) have a sulfonic acid group internally (at position 2 or subsequent positions). The distribution of the substitution positions of a sulfonic acid group in the carbon chains of component (A) can be quantified by methods such as gas chromatography, nuclear magnetic resonance spectroscopy or the like.

In component (A), the proportion of IOS whose hydrocarbon chains mentioned above have a sulfonic acid group at position 2 is preferably 5% or more and more preferably 10% or more, and preferably 45% or less and more preferably 30% or less on a molar basis or a mass basis from the viewpoint of improving hydrophilizing performance.

In component (A), the proportion of IOS whose hydrocarbon chains mentioned above have a sulfonic acid group at position 1 is preferably 0.2% or more, more preferably 0.5% or more and further preferably 1.0% or more, and preferably 20% or less, more preferably 10% or less, further preferably 5% or less and furthermore preferably 3% or less on a molar basis or a mass basis from the viewpoint of improving hydrophilizing performance.

In component (A), the molar ratio of H species to O species (H species/O species) is preferably more than 50/50 and more preferably more than 70/30, and preferably 95/5 or less and more preferably 90/10 or less from the viewpoint of improving cleaning performance and hydrophilizing performance.

### <Component (B)>

Component (B) is a polymer having a cationic group.

Component (B) is preferably one or more selected from (B1) a polysaccharide derivative having a cationic group (hereinafter referred to as component (B1)) and (B2) an acrylic acid polymer having a cationic group (hereinafter referred to as component (B2)), and more preferably component (B1) from the viewpoint of improving hydrophilizing performance.

Component (B1) is a polysaccharide derivative having a cationic group.

Component (B1) of the present invention is characterized as a polysaccharide derivative formed by a cationic group being bonded directly or via a linking group to the group left after removal of a hydrogen atom from a hydroxyl group of a polysaccharide or a derivative thereof, a precursor compound of component (B1). Note that the above bonding type of "a cationic group being bonded directly or via a linking group to the group left after removal of a hydrogen atom from a hydroxyl group of a polysaccharide or a derivative thereof" does not include one that cationic atoms of cationic groups, for example, a nitrogen cation, directly form covalent bonds with the group left after removal of a hydrogen atom from a hydroxyl group of the polysaccharide or derivative thereof, namely, an oxygen atom.

Examples of the polysaccharide include one or more polysaccharides selected from, for example, cellulose, guar gum and starch. While component (B1) is a polysaccharide derivative, a polysaccharide derivative can be used as a precursor compound to obtain this. In other words, component (B1) may be a derivative of a polysaccharide derivative. Examples of the polysaccharide derivative, a precursor compound of component (B1), include polysaccharide derivatives formed by some of or all the hydrogen atoms of the hydroxyl groups of the above polysaccharide being substituted by a hydroxyalkyl group with 1 or more and 4 or less carbons (hereinafter also referred to as "hydroxyalkyl-substituted species"). The hydroxyalkyl group with 1 or more and 4 or less carbons is preferably a hydroxyalkyl group with preferably 2 or more and 4 or less carbons. Examples of the hydroxyalkyl group with 2 or more and 4 or less carbons include one or more groups selected from, for example, a hydroxyethyl group, a hydroxypropyl group and a hydroxybutyl group, and one or more groups selected from a hydroxyethyl group and a hydroxypropyl group are preferable. Component (B1) may be a compound formed by a cationic group being introduced to a polysaccharide or a polysaccharide derivative selected from one or more polysaccharides selected from cellulose, guar gum or starch or hydroxyalkyl-substituted species of them.

Examples of the polysaccharide derivative having a cationic group in component (B1) include polysaccharide derivatives formed by a cationic group being bonded to the group left after removal of a hydrogen atom from a hydroxyl group of the polysaccharide or derivative thereof, a precursor compound of component (B1), preferably the above hydroxyalkyl-substituted species, via an alkylene group with 1 or more and 4 or less carbons which may include a hydroxyl group, a linking group [hereinafter referred to as linking group (1)].

The cationic group is preferably a group including a nitrogen cation and more preferably a quaternary ammonium group.

Linking group (1) is an alkylene group with 1 or more and 4 or less carbons which may include a hydroxyl group. Examples of the alkylene group with 1 or more and 4 or less carbons include one or more alkylene groups selected from straight-chain alkylene groups with 1 or more and 4 or less carbons which may include a hydroxyl group and branched-chain alkylene groups with 1 or more and 4 or less carbons which may include a hydroxyl group.

When the cationic group is a quaternary ammonium group, examples of the three hydrocarbon groups other than linking group (1) bonded to the quaternary ammonium group each independently include straight-chain or branched-chain hydrocarbon groups with 1 or more and 4 or less carbons. Examples of the straight-chain hydrocarbon groups with 1 or more and 4 or less carbons include a methyl group, an ethyl group, an n-propyl group and an n-butyl group. Examples of the branched-chain hydrocarbon groups with 1 or more and 4 or less carbons include an isopropyl group, a sec-butyl group, a tert-butyl group and an isobutyl group. The straight-chain hydrocarbon groups with 1 or more and 4 or less carbons are preferably a methyl group and an ethyl group.

Examples of the counterion of the quaternary ammonium group include one or more counterions selected from alkyl sulfate ions with 1 or more and 3 or less carbons, a sulfate ion, a phosphate ion, fatty acid ions with 1 or more and 3 or less carbons and halide ions. Among these, one or more selected from alkyl sulfate ions with 1 or more and 3 or less carbons, a sulfate ion and halide ions are preferable, and halide ions are more preferable from the viewpoints of ease of production and availability of raw materials. Exemples of the halide ions include a fluoride ion, a chloride ion, a bromide ion and an iodide ion. One or more selected from a chloride ion and a bromide ion are preferable, and a chloride ion is more preferable from the viewpoints of water-solubility and chemical stability of the polysaccharide derivative of component (B1). Note that there may be only one counterion or two or more counterions.

In the present invention, the degree of substitution means the number of substitutions by group per constituent monosaccharide unit, namely, the molar average degree of substitution (MS), of component (B1).

The degree of substitution by cationic group of the polysaccharide derivative having a cationic group of component (B1) is preferably 0.005 or more, more preferably 0.01 or more and further preferably 0.02 or more, and preferably 0.5 or less, more preferably 0.3 or less, further preferably 0.25 or less, furthermore preferably 0.2 or less, furthermore preferably 0.15 or less and furthermore preferably 0.1 or less from the viewpoint of uniform adsorption with component (A).

Component (B1) may have a hydrocarbon group with 1 or more and 18 or less carbons. In other words, component (B1) may be a polysaccharide derivative having both a cationic group and a hydrocarbon group with 1 or more and 18 or less carbons.

Examples of the polysaccharide derivative having a hydrocarbon group with 1 or more and 18 or less carbons in component (B1) include polysaccharide derivatives formed by a hydrocarbon group with 1 or more and 18 or less carbons being bonded directly or via a linking group [hereinafter referred to as linking group (2)] to the polysaccharide or derivative thereof, a precursor compound of component (B1).

Examples of linking group (2) include one or more groups selected from alkyleneoxy groups with 1 or more and 3 or less carbons which may have a hydroxyl group, polyoxyalkylene groups which are alkylene groups with 1 or more and 3 or less carbons, carbonyl groups, carbonyloxy groups and oxycarbonyl groups. One linking group (2) may be one of or a combination of two or more of the above linking groups. Further, the polysaccharide derivative may include one or two or more linking groups.

In the present invention, when the above hydrocarbon group is linked to an oxygen atom of linking group (2), the number of carbons in the hydrocarbon group of component (B1) represents the number of carbons in the above hydrocarbon group bonded to the oxygen atom. The case where the above hydrocarbon group is linked via a carbonyl group results in a structure to which an acyl group is bonded, in which case the number of carbons in the hydrocarbon group of component (B1) represents the number of carbons in the acyl group. The same applies to when the above hydrocarbon group is linked via a carbonyloxy group and an oxycarbonyl group, in which case the number of carbons in the hydrocarbon group of component (B) includes their numbers of carbons. When a 1,2-epoxyalkane is used to introduce the hydrocarbon group into the polysaccharide or polysaccharide derivative, the number of carbons in the hydrocarbon group of component (B) represents the number of carbons in the aliphatic hydrocarbon group bonded to the ether group resulting from the epoxy group. The epoxy group moiety is linking group (2). For example, when 1,2-epoxytetradecane is used to introduce the hydrocarbon group into the polysaccharide or polysaccharide derivative, the number of carbons in the hydrocarbon group is 12. In other words, the oxyethylene group, linking group (2), is bonded to a hydroxyl group of the polysaccharide or polysaccharide derivative, and the alkyl group with 12 carbons (dodecyl group) is bonded thereto via this linking group. The same applies to the cases where alkyl glycidyl ethers are used.

Examples of the polysaccharide derivative having a hydrocarbon group with 1 or more and 18 or less carbons in component (B1) further include polysaccharide derivatives formed by a hydrocarbon group with 1 or more and 18 or less carbons being bonded directly or via linking group (2), preferably via linking group (2) to an oxygen atom left after removal of a hydrogen atom from some of or all the hydroxyl groups of the above hydroxyalkyl-substituted species.

The hydrocarbon group with 1 or more and 18 or less carbons has preferably 2 or more, further preferably 4 or more, further preferably 6 or more, furthermore preferably 8 or more and furthermore preferably 10 or more, and preferably 16 or less and more preferably 14 or less carbons. The hydrocarbon group with 1 or more and 18 or less carbons is preferably an aliphatic hydrocarbon group.

The degree of substitution by hydrocarbon group with 1 or more and 18 or less carbons of the polysaccharide derivative having a hydrocarbon group with 1 or more and 18 or less carbons of component (B1) is preferably 0.001 or more, more preferably 0.005 or more and further preferably 0.01 or more, and preferably 0.10 or less, more preferably 0.05 or less, further preferably 0.03 or less and furthermore preferably 0.025 or less from the viewpoints of adsorptivity to hard surfaces and solubility in water.

In the present invention, the degree of substitution by hydrocarbon group with 1 or more and 18 or less carbons and the degree of substitution by cationic group of component (B1) each mean the number of substitutions by that group per constituent monosaccharide unit, namely, the molar average degree of substitution (MS). For example, when the polysaccharide is cellulose, "degree of substitution by group" means the average molar number of that group introduced into 1 mol of an anhydroglucose unit. The degree of substitution by cationic group and the degree of substitution by hydrocarbon group with 1 or more and 18 or less carbons of the polysaccharide derivative are each determined by the methods described in Examples.

Component (B1) can also have an anionic group, in which case the ratio of the degree of substitution by anionic group to the total of the degree of substitution by cationic group and the degree of substitution by hydrocarbon group with 1 or more and 18 or less carbons in component (B1), degree of substitution by anionic group/(degree of substitution by cationic group + degree of substitution by hydrocarbon group with 1 or more and 18 or less carbons), is preferably 3 or less, more preferably 1.7 or less, further preferably 1.5 or less, furthermore preferably 1 or less, furthermore preferably 0.5 or less and furthermore preferably 0.1 or less, and may be 0 or more, and is preferably 0 from the viewpoint of solubility in water.

The weight average molecular weight of component (B1) of the present invention is preferably 10,000 or more, more preferably 30,000 or more and further preferably 60,000 or more, and preferably 2,000,000 or less, more preferably 1,000,000 or less, further preferably 500,000 or less, furthermore preferably 350,000 or less, furthermore preferably 300,000 or less, furthermore preferably 250,000 or less, furthermore preferably 200,000 or less and furthermore preferably 150,000 or less from the viewpoints of adsorptivity to hard surfaces and solubility in water. The weight average molecular weight of component (B1) can be given in terms of that of polyethylene glycol by GPC (gel permeation chromatography).

Component (B2) is an acrylic acid polymer having a cationic group.

Component (B2) is preferably a copolymer including constituent unit (b1) represented by the following formula (1) and constituent unit (b2) represented by the following formula (2), wherein the molar ratio of constituent unit (b1) to constituent unit (b2), constituent unit (b1)/constituent unit (b2), is 30/70 or more and 99.9/0.1 or less, 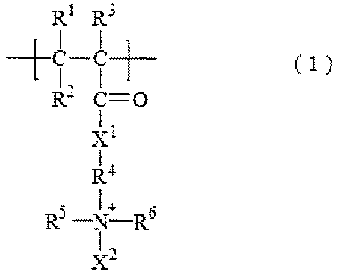 wherein
R¹ to R³ are the same or different, and each represent a hydrogen atom or an alkyl group with 1 or 2 carbons,
R⁴ is an alkylene group with 1 or more and 4 or less carbons or -Y¹-OPO₃⁻-Y²-,
Y¹ and Y² are the same or different, and each represent an alkylene group with 1 or more and 4 or less carbons,
R⁵ and R⁶ are the same or different, and each represent a hydrocarbon group with 1 or more and 4 or less carbons,
X¹ is O or NR⁷, where R⁷ is a hydrogen atom or a hydrocarbon group with 1 or more and 4 or less carbons, and
X² represents a hydrogen atom, a hydrocarbon group with 1 or more and 4 or less carbons, R¹⁷SO₃⁻ or R¹⁷COO⁻, provided that X² is R¹⁷SO₃⁻ or R¹⁷COO⁻ and R¹⁷ is an alkylene group with 1 or more and 4 or less carbons when R⁴ is an alkylene group with 1 or more and 4 or less carbons, and X² is a hydrogen atom or a hydrocarbon group with 1 or more and 4 or less carbons when R⁴ is -Y¹-OPO₃⁻-Y²-, 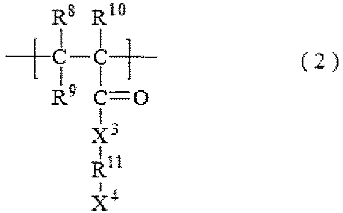 wherein
   R⁸ to R¹⁰ are the same or different, and each represent a hydrogen atom or an alkyl group with 1 or 2 carbons,
   X³ is O,
   R¹¹ is an alkylene group with 1 or more and 4 or less carbons, and
   X⁴ is N⁺R¹²R¹³R¹⁴X⁵ or NR¹⁵R¹⁶, where R¹² to R¹⁶ are the same or different and each represent a hydrogen atom or a hydrocarbon group with 1 or more and 4 or less carbons, and X⁵ represents an anion.

Constituent unit (b1) represented by the formula (1) may be a constituent unit derived from an unsaturated monomer having a betaine group. Further, constituent unit (b2) represented by the formula (2) may be a constituent unit derived from an unsaturated monomer having a cationic group.

The weight average molecular weight of component (B2) is preferably 500 or more, more preferably 5,000 or more, further preferably 10,000 or more and furthermore preferably 30,000 or more from the viewpoint of attaining both rinsing durability and solubility, and preferably 200,000 or less, more preferably 150,000 or less and further preferably 100,000 or less from the same viewpoint. This weight average molecular weight can be measured by the method described in Examples.

The molar ratio of constituent unit (b1) to constituent unit (b2) in component (B2), constituent unit (b1)/constituent unit (b2), is 30/70 or more and 99.9/0.1 or less from the viewpoint of surface hydrophilization. The molar ratio of constituent unit (b1) to constituent unit (b2) is preferably 50/50 or more, more preferably 55/45 or more, further preferably 60/40 or more, furthermore preferably 75/25 or more and furthermore preferably 90/10 or more from the same viewpoint, and preferably 98/2 or less and more preferably 96/4 or less from the viewpoint of rinsing durability.

### (Content of constituent unit (b1))

The content of constituent unit (b1) in component (B2) is preferably 30 mol% or more, more preferably 50 mol% or more, further preferably 70 mol% or more, furthermore preferably 80 mol% or more and furthermore preferably 90 mol% or more from the viewpoint of surface hydrophilization, and preferably 99 mol% or less, more preferably 98 mol% or less and further preferably 95 mol% or less from the same viewpoint.

Further, the content of constituent unit (b1) in component (B2) is preferably 30 mass% or more, more preferably 50 mass% or more, further preferably 70 mass% or more, furthermore preferably 80 mass% or more and furthermore preferably 90 mass% or more from the viewpoint of surface hydrophilization, and preferably 99 mass% or less, more preferably 98 mass% or less and further preferably 95 mass% or less from the viewpoint of enhancing adsorptivity to surfaces.

### (Structure of constituent unit (b1))

R¹ and R² in the formula (1) each represent preferably a hydrogen atom from the viewpoint of availability of the unsaturated monomer and the viewpoint of polymerizability of the monomer.

R³ in the formula (1) is preferably a hydrogen atom or a methyl group and more preferably a methyl group from the viewpoint of availability of the unsaturated monomer and the viewpoint of polymerizability of the monomer.

X¹ in the formula (1) is preferably O from the viewpoint of availability of the unsaturated monomer and the viewpoint of polymerizability of the monomer. The alkylene group with 1 or more and 4 or less carbons of R⁴ is preferably an alkylene group with 2 or 3 carbons and more preferably an alkylene group with 2 carbons from the same viewpoints.

R⁴ in the formula (1) is preferably an alkylene group with 1 or more and 4 or less carbons and more preferably an alkylene group with 2 or 3 carbons from the viewpoint of water-solubility.

Y¹ and Y² in the formula (1) each represent preferably an alkylene group with 2 or 3 carbons and more preferably an alkylene group with 2 carbons.

R⁵ and R⁶ in the formula (1) each represent preferably a methyl group or an ethyl group and more preferably a methyl group from the viewpoint of availability of the unsaturated monomer and the viewpoint of polymerizability of the monomer.

While X² in the formula (1) is a hydrogen atom, a hydrocarbon group with 1 or more and 4 or less carbons, R¹⁷SO₃⁻ or R¹⁷COO⁻, X² is R¹⁷SO₃⁻ or COO⁻ when R⁴ is an alkylene group with 1 or more and 4 or less carbons, and X² is a hydrogen atom or a hydrocarbon group with 1 or more and 4 or less carbons when R⁴ is -Y¹-OPO₃⁻-Y²-. X² is preferably a hydrocarbon group with 1 or more and 4 or less carbons and more preferably a methyl group when R⁴ is -Y¹-OPO₃⁻-Y²- from the viewpoint of water-solubility. X² is preferably R¹⁷SO₃⁻ when R⁴ is an alkylene group with 1 or more and 4 or less carbons from the same viewpoint.

Further, R¹⁷ is preferably an alkylene group with 1 or more and 3 or less carbons and more preferably an alkylene group with 2 or more and 3 or less carbons.

### (Content of constituent unit (b2))

The content of constituent unit (b2) in component (B2) is preferably 1 mol% or more, more preferably 2 mol% or more and further preferably 5 mol% or more from the viewpoint of rinsing durability, and preferably 70 mol% or less, more preferably 50 mol% or less, further preferably 30 mol% or less, further preferably 20 mol% or less and further preferably 10 mol% or less from the same viewpoint.

Further, the content of constituent unit (b2) in component (B2) is preferably 1 mass% or more, more preferably 2 mass% or more and further preferably 5 mass% or more from the viewpoint of rinsing durability, and preferably 70 mass% or less, more preferably 50 mass% or less, further preferably 30 mass% or less, furthermore preferably 20 mass% or less and furthermore preferably 10 mass% or less from the same viewpoint.

### (Structure of constituent unit (b2))

R⁸ and R⁹ in the formula (2) each represent preferably a hydrogen atom from the viewpoint of availability of the unsaturated monomer and the viewpoint of polymerizability of the monomer.

R¹⁰ in the formula (2) is preferably a hydrogen atom or a methyl group and more preferably a methyl group from the viewpoint of polymerizability of the monomer.

X³ in the formula (2) is preferably O from the viewpoint of polymerizability of the monomer.

R¹¹ in the formula (2) is preferably an alkylene group with 2 or 3 carbons and more preferably an alkylene group with 2 carbons from the viewpoint of polymerizability of the monomer.

X⁴ in the formula (2) is N⁺R¹²R¹³R¹⁴X⁵ or NR¹⁵R¹⁶ and preferably N⁺R¹²R¹³R¹⁴X⁵ from the viewpoint of ease of quaternarization reactions, and R¹², R¹³ and R¹⁴ each represent preferably a methyl group or an ethyl group from the same viewpoint.

R¹⁵ and R¹⁶ in the formula (2) each represent preferably a methyl group or an ethyl group and more preferably a methyl group from the viewpoint of ease of quaternarization reactions.

X⁵ in the formula (2) is an anion, which is preferably a halogen ion or C₂H₅SO₄⁻ and more preferably C₂H₅SO₄⁻.

### (Constituent unit other than constituent units (b1) and (b2))

Component (B2) may contain a constituent unit other than constituent units (b1) and (b2) in a range that the effects of the present invention are not impaired. The constituent unit other than constituent units (b1) and (b2) is preferably a constituent unit derived from an unsaturated monomer other than unsaturated monomers having a sulfobetaine group, and more preferably a constituent unit derived from a hydrophobic unsaturated monomer such as styrene or the like.

The content of the constituent unit other than constituent units (b1) and (b2) in component (B2) is preferably 10 mol% or less, more preferably 5 mol% or less, more preferably 1 mol% or less, further preferably 0.5 mol% or less and furthermore preferably 0.1 mol% or less from the viewpoint of surface hydrophilization. The content of the constituent unit other than constituent units (b1) and (b2) in component (B2) may be 0 mol%.

The content of the constituent unit other than constituent units (b1) and (b2) in component (B2) is preferably 10 mass% or less, more preferably 5 mass% or less, further preferably 1 mass% or less, further preferably 0.5 mass% or less and furthermore preferably 0.1 mass% or less from the viewpoint of surface hydrophilization. The content of the constituent unit other than constituent units (b1) and (b2) in component (B2) may be 0 mass%.

The total content of constituent units (b1) and (b2) in component (B2) is preferably 90 mol% or more, more preferably 95 mol% or more, further preferably 99 mol% or more, furthermore preferably 99.5 mol% or more and furthermore preferably 99.9 mol% or more from the viewpoint of surface hydrophilization. The total content of constituent units (b1) and (b2) in component (B2) may be 100 mol%.

The total content of constituent units (b1) and (b2) in component (B2) is preferably 90 mass% or more, more preferably 95 mass% or more, further preferably 99 mass% or more, furthermore preferably 99.5 mass% or more and furthermore preferably 99.9 mass% or more from the viewpoint of surface hydrophilization. The total content of constituent units (b1) and (b2) in component (B2) may be 100 mass%.

### (Method for producing component (B2))

While any method may be employed as a method for producing component (B2), specific examples include methods such as the following (i) and (ii). The method (ii) is preferable from the viewpoints of availability of raw materials and ease of production.
(i) A method of copolymerizing unsaturated monomers having a betaine group and a cationic group to obtain component (B2)
(ii) A method of copolymerizing unsaturated monomers having an amino group and a cationic group and thereafter carrying out quaternarization with a betainizing agent to obtain component (B2)

### <Composition and others>

The hydrophilizing agent composition for hard surfaces of the present invention contains component (A) in an amount of preferably 0.1 mass% or more, more preferably 0.5 mass% or more, further preferably 1 mass% or more and furthermore preferably 1.5 mass% or more, and preferably 60 mass% or less, more preferably 40 mass% or less, further preferably 20 mass% or less, furthermore preferably 10 mass% or less, furthermore preferably 5 mass% or less, furthermore preferably 4 mass% or less and furthermore preferably 3 mass% or less from the viewpoint of attaining both hydrophilizing performance and formulation viscosity.

The hydrophilizing agent composition for hard surfaces of the present invention contains component (B) in an amount of preferably 0.002 mass% or more, more preferably 0.01 mass% or more, further preferably 0.02 mass% or more and furthermore preferably 0.1 mass% or more, and preferably 6 mass% or less, more preferably 4 mass% or less, further preferably 2 mass% or less, furthermore preferably 1 mass% or less and furthermore preferably 0.5 mass% or less from the viewpoint of attaining both adsorptivity to hard surfaces and formulation viscosity.

The mass ratio of the content of component (A) to the content of component (B) in the hydrophilizing agent composition for hard surfaces of the present invention, (A)/(B), is preferably 1 or more, more preferably 2 or more, further preferably 3 or more, further preferably 5 or more, furthermore preferably 7 or more and furthermore preferably 9 or more, and preferably 100 or less, more preferably 75 or less, further preferably 50 or less, furthermore preferably 45 or less, furthermore preferably 25 or less, furthermore preferably 20 or less, furthermore preferably 15 or less and furthermore preferably 12 or less from the viewpoint of hydrophilization.

The hydrophilizing agent composition for hard surfaces of the present invention can contain optional components other than components (A) and (B) in a range that the effects of the present invention are not impaired. Examples of such optional components include surfactants other than component (A), chelating agents, alkali agents, enzymes, inorganic salts (for example, inorganic salts including calcium or magnesium), disinfectants and fragrances.

While the hydrophilizing agent composition for hard surfaces of the present invention may contain internal olefin sulfonates other than component (A), their contents are limited from the viewpoint of enjoying the effects of the present invention.

The proportion of component (A) in internal olefin sulfonates with 12 or more and 22 or less carbons in the hydrophilizing agent composition for hard surfaces of the present invention is preferably 20 mass% or more, more preferably 40 mass% or more, further preferably 50 mass% or more, furthermore preferably 60 mass% or more, furthermore preferably 70 mass% or more, furthermore preferably 80 mass% or more and furthermore preferably 90 mass% or more, and preferably 100 mass% or less, and may be 100 mass% from the viewpoint of improving hydrophilizing performance.

While the hydrophilizing agent composition for hard surfaces of the present invention may contain surfactants other than component (A), their contents are limited from the viewpoint of enjoying the effects of the present invention.

The proportion of component (A) in all surfactants in the hydrophilizing agent composition for hard surfaces of the present invention is preferably 20 mass% or more, more preferably 40 mass% or more, further preferably 50 mass% or more, furthermore preferably 60 mass% or more, furthermore preferably 70 mass% or more, furthermore preferably 80 mass% or more and furthermore preferably 90 mass% or more, and preferably 100 mass% or less, and may be 100 mass% from the viewpoint of hydrophilization.

The hydrophilizing agent composition for hard surfaces of the present invention contains water. Water is used in an amount equal to the balance other than components (A) and (B) and optional components. The hydrophilizing agent composition for hard surfaces of the present invention can contain water in an amount of, for example, 20 mass% or more and further 30 mass% or more, and 99 mass% or less and further 98 mass% or less. Ion exchange water or distilled water from which metallic components have been removed can be used as the water.

The pH of the hydrophilizing agent composition for hard surfaces of the present invention at 20°C is preferably 2 or more and more preferably 3 or more, and preferably 12 or less and more preferably 11 or less.

The viscosity of the hydrophilizing agent composition for hard surfaces of the present invention at 20°C is preferably 1 mPa·s or more and more preferably 5 mPa·s or more, and preferably 20,000 mPa·s or less and more preferably 10,000 mPa·s or less. This viscosity can be measured with a B-type viscometer ("TVB-10M" manufactured by Toki Sangyo Co., Ltd) with a rotor and the number of revolutions appropriate for a viscosity. When the viscosity of the composition is too low to be measured with the B-type viscometer, it can be measured with a rheometer ("Physica MCR301" manufactured by Anton Paar GmbH) with a cone plate appropriate for the viscosity.

The hydrophilizing agent composition for hard surfaces of the present invention is directed to hard surfaces. Examples of the hard surfaces include hard surfaces made of one or more materials selected from plastic, ceramic, metal, wood, glass, rubber, carbon materials and others. The hard surfaces may be the surfaces of hard articles, for example, the surfaces of hard articles made of the above materials. Examples of the plastic include acrylic resin, polyamide, polycarbonate, melamine, polyvinyl chloride, polyester, polystyrene, polyethylene, polypropylene, ABS, FRP (fiber reinforced plastic) and others. Examples of the metal include alloys such as stainless steel or the like, aluminum, irons such as automotive steel or the like, and others. Examples of the rubber include natural rubber, diene synthetic rubber and others. Examples of the wood include lumber for use in flooring or the like, and others. The lumber for use in flooring or the like may have a treated surface.

The hard surface is preferably a hard surface made of one or more materials selected from polyester, polyethylene, polypropylene, ceramic and glass.

### [Method for hydrophilizing hard surface]

The present invention provides a method for hydrophilizing a hard surface including bringing a treatment liquid into contact with the hard surface, the treatment liquid containing, component (A), component (B) and water (hereinafter sometimes also referred to as the treatment liquid of the present invention). Component (A), component (B) and the hard surface are the same as those stated in the hydrophilizing agent composition for hard surfaces of the present invention. The matters stated in the hydrophilizing agent composition for hard surfaces of the present invention can be appropriately applied to the method for hydrophilizing a hard surface of the present invention. For example, preferable aspects of components (A) and (B) such as their specific examples, their contents in the treatment liquid, the mass ratios therebetween or the like in the method for hydrophilizing a hard surface of the present invention are the same as those in the hydrophilizing agent composition for hard surfaces of the present invention (provided that the hydrophilizing agent composition for hard surfaces is read as the treatment liquid as necessary).

The treatment liquid of the present invention may be the hydrophilizing agent composition for hard surfaces of the present invention, or may be prepared by mixing the hydrophilizing agent composition for hard surfaces of the present invention with water.

Water having a water hardness of preferably 2°dH or more, more preferably 4°dH or more and further preferably 6°dH or more, and preferably 100°dH or less, more preferably 50°dH or less, further preferably 30°dH or less, furthermore preferably 20°dH or less, furthermore preferably 15°dH or less and furthermore preferably 10°dH or less is suitable for use as water for preparing the treatment liquid of the present invention from the viewpoint of hydrophilization.

The treatment liquid of the present invention is a liquid composition including water, and preferably an aqueous solution or a water dispersion from the viewpoint of handling stability.

The treatment liquid of the present invention contains component (A) in an amount of preferably 0.001 mass% or more, more preferably 0.005 mass% or more and further preferably 0.01 mass% or more, and preferably 5 mass% or less, more preferably 3 mass% or less and further preferably 1 mass% or less from the viewpoint of hydrophilization.

The treatment liquid of the present invention contains component (B) in an amount of preferably 0.00002 mass% or more, more preferably 0.00005 mass% or more and further preferably 0.0002 mass% or more, and preferably 0.5 mass% or less, more preferably 0.3 mass% or less and further preferably 0.1 mass% or less from the viewpoint of hydrophilization.

The mass ratio of the content of component (A) to the content of component (B) in the treatment liquid of the present invention, (A)/(B), is preferably 1 or more, more preferably 2 or more, further preferably 3 or more, further preferably 5 or more, furthermore preferably 7 or more and furthermore preferably 9 or more, and preferably 100 or less, more preferably 75 or less, further preferably 50 or less, furthermore preferably 45 or less, furthermore preferably 25 or less, furthermore preferably 20 or less, furthermore preferably 15 or less and furthermore preferably 12 or less from the viewpoint of hydrophilization.

The proportion of component (A) in internal olefin sulfonates with 12 or more and 22 or less carbons in the treatment liquid of the present invention is preferably 20 mass% or more, more preferably 40 mass% or more, further preferably 50 mass% or more, furthermore preferably 60 mass% or more, furthermore preferably 70 mass% or more, furthermore preferably 80 mass% or more and furthermore preferably 90 mass% or more, and preferably 100 mass% or less, and may be 100 mass% from the viewpoint of improving hydrophilizing performance.

The proportion of component (A) in all surfactants in the treatment liquid of the present invention is preferably 20 mass% or more, more preferably 40 mass% or more, further preferably 50 mass% or more, furthermore preferably 60 mass% or more, furthermore preferably 70 mass% or more, furthermore preferably 80 mass% or more and furthermore preferably 90 mass% or more, and preferably 100 mass% or less, and may be 100 mass% from the viewpoint of hydrophilization.

In the method for hydrophilizing a hard surface of the present invention, the treatment liquid of the present invention is brought into contact with the hard surface for preferably 0.1 seconds or more, more preferably 0.5 seconds or more and further preferably 1 second or more, and preferably 90 minutes or less, more preferably 60 minutes or less and further preferably 30 minutes or less.

The temperature of the treatment liquid of the present invention brought into contact with the hard surface is preferably 5°C or more, more preferably 10°C or more and more preferably 15°C or more from the viewpoint of improving solubility of the treatment liquid in water, and preferably 95°C or less, more preferably 90°C or less and more preferably 80°C or less from the viewpoint of improving hydrophilizing performance.

The method for hydrophilizing a hard surface of the present invention can include, after bringing the treatment liquid of the present invention into contact with the hard surface, rubbing the hard surface.

Further, the method for hydrophilizing a hard surface of the present invention may include, after bringing the treatment liquid of the present invention into contact with the hard surface, leaving the hard surface standing for preferably 10 seconds or more, more preferably 1 minute or more and further preferably 2 minutes or more, and preferably 30 minutes or less, more preferably 15 minutes or less and further preferably 10 minutes or less. The temperature at which the hard surface is left standing is preferably 0°C or more and 80°C or less.

The method for hydrophilizing a hard surface of the present invention can include, after bringing the treatment liquid of the present invention into contact with the hard surface, and preferably, thereafter leaving the hard surface standing in the above manner, rinsing the hard surface with water. When the treatment liquid of the present invention is used to treat the hard surface, a hydrophilization effect is maintained even if the surface after treatment is rinsed several times. Accordingly, the present invention has more advantageous effect on target objects for which rinsing is desirable. After rinsed, the hard surface can be dried. Water having the same level of hardness as water used to prepare the treatment liquid of the present invention is preferably used for rinsing. For example, water having a hardness of 4°dH or more and 100°dH or less can be used for rinsing.

A method for bringing the treatment liquid of the present invention into contact with the hard surface is not particularly limited. Examples include, for example, the following methods (i) to (iii) or the like:
(i) a method of immersing a hard article in the treatment liquid of the present invention;
(ii) a method of spraying or applying the treatment liquid of the present invention to the hard surface; and
(iii) a method of hydrophilizing the hard surface in the usual manner with the treatment liquid of the present invention.

In the method (i), the period of time for immersion is preferably 0.5 minutes or more and more preferably 1 minute or more, and preferably 60 minutes or less and more preferably 50 minutes or less from the viewpoint of enhancing hydrophilizing performance of the treatment liquid of the present invention and the viewpoint of economy.

In the method (ii), the treatment liquid of the present invention can be sprayed or applied to the hard surface by a method appropriately selected according to the size (area) of the solid surface or the like. A preferable method is spraying the treatment liquid of the present invention to the hard surface with a spray or the like, and thereafter drying the hard surface. After the spraying, the hard surface may be rinsed with water as necessary. Further, after the spraying, the treatment liquid may be spread thinly with a sponge or the like.

For example, when the content of component (A) of the present invention in the treatment liquid of the present invention is 0.1 mass%, the amount of the treatment liquid of the present invention sprayed or applied to the hard surface is preferably 0.001 mL or more and 1 mL or less per 10 cm².

In the method (iii), the treatment liquid of the present invention is preferably used and brought into contact with the hard surface in the form of the hydrophilizing agent composition for hard surfaces containing components (A) and (B) of the present invention. When the treatment liquid takes the form of such a hydrophilizing agent composition for hard surfaces, it has a pH of preferably 4 or more, and preferably 10 or less and more preferably 8 or less from the viewpoints of safety in handling and preventing the hard surface from being damaged.

### [Method for maintaining hydrophilicity of hard surface]

The present invention provides a method for maintaining hydrophilicity of a hard surface including bringing a treatment liquid into contact with the hard surface, the treatment liquid containing, component (A), component (B) and water. Component (A), component (B) and the hard surface are the same as those stated in the hydrophilizing agent composition for hard surfaces of the present invention. The treatment liquid is the same as the treatment liquid of the present invention stated in the method for hydrophilizing a hard surface of the present invention. The method for bringing the treatment liquid into contact with the hard surface is the same as in the aspects stated in the method for hydrophilizing a hard surface of the present invention.

The matters stated in the hydrophilizing agent composition for hard surfaces of the present invention and the method for hydrophilizing a hard surface of the present invention can be appropriately applied to the method for maintaining hydrophilicity of a hard surface of the present invention. For example, preferable aspects of components (A) and (B) such as their specific examples, their contents in the treatment liquid, the mass ratios therebetween or the like in the method for maintaining hydrophilicity of a hard surface of the present invention are the same as those in the hydrophilizing agent composition for hard surfaces of the present invention (provided that the hydrophilizing agent composition for hard surfaces is read as the treatment liquid as necessary).

In connection with the above embodiments, the present invention further discloses the following hydrophilizing agent composition for hard surfaces, method for hydrophilizing a hard surface and method for maintaining hydrophilicity of a hard surface. The matters stated in the hydrophilizing agent composition for hard surfaces, the method for hydrophilizing a hard surface and the method for maintaining hydrophilicity of a hard surface of the present invention can be appropriately applied to these aspects, and vice versa.
<1> A hydrophilizing agent composition for hard surfaces containing, (A) an internal olefin sulfonate with 18 carbons (hereinafter referred to as component (A)), (B) a polymer having a cationic group (hereinafter referred to as component (B)) and water.
<2> The hydrophilizing agent composition for hard surfaces according to <1>, wherein the salt of component (A) is one or more selected from alkali metal salts, alkaline earth metal (1/2 atom) salts, ammonium salts and organic ammonium salts, and preferably one or more selected from a sodium salt, a potassium salt, a calcium salt, a magnesium salt and alkanol ammonium salts with 2 or more and 6 or less carbons.
<3> The hydrophilizing agent composition for hard surfaces according to <1> or <2>, wherein, in component (A), the proportion of internal olefin sulfonates whose hydrocarbon chains have a sulfonic acid group at position 2 is preferably 5% or more and more preferably 10% or more, and preferably 45% or less and more preferably 30% or less on a molar basis or a mass basis.
<4> The hydrophilizing agent composition for hard surfaces according to any of <1> to <3>, wherein, in component (A), the proportion of internal olefin sulfonates whose hydrocarbon chains have a sulfonic acid group at position 1 is preferably 0.2% or more, more preferably 0.5% or more and further preferably 1.0% or more, and preferably 20% or less, more preferably 10% or less, further preferably 5% or less and furthermore preferably 3% or less on a molar basis or a mass basis.
<5> The hydrophilizing agent composition for hard surfaces according to any of <1> to <4>, wherein component (A) includes hydroxy alkane sulfonates (hereinafter referred to as H species) and olefin sulfonates (hereinafter referred to as O species), and the molar ratio of H species to O species in component (A) (H species/O species) is preferably more than 50/50 and more preferably more than 70/30, and preferably 95/5 or less and more preferably 90/10 or less.
<6> The hydrophilizing agent composition for hard surfaces according to any of <1> to <5>, wherein component (B) is one or more selected from (B1) a polysaccharide derivative having a cationic group (hereinafter referred to as component (B1)) and (B2) an acrylic acid polymer having a cationic group (hereinafter referred to as component (B2)).
<7> The hydrophilizing agent composition for hard surfaces according to <6>, wherein a precursor compound of component (B1) is a polysaccharide or a polysaccharide derivative.
<8> The hydrophilizing agent composition for hard surfaces according to <7>, wherein the polysaccharide, a precursor compound of component (B1), is one or more selected from cellulose, guar gum and starch.
<9> The hydrophilizing agent composition for hard surfaces according to <7> or <8>, wherein the polysaccharide derivative, a precursor compound of component (B1), is a polysaccharide derivative (hereinafter referred to as "hydroxyalkyl-substituted species") formed by some of or all the hydrogen atoms of the hydroxyl groups of the polysaccharide being substituted by a hydroxyalkyl group with 1 or more and 4 or less carbons, preferably a hydroxyalkyl group with 2 or more and 4 or less carbons, and more preferably one or more groups selected from a hydroxyethyl group, a hydroxypropyl group and a hydroxybutyl group.
<10> The hydrophilizing agent composition for hard surfaces according to <9>, wherein the polysaccharide derivative having a cationic group of component (B1) is a polysaccharide derivative formed by a cationic group, preferably a group including a nitrogen cation or more preferably a quaternary ammonium group being bonded to the group left after removal of a hydrogen atom from a hydroxyl group of the polysaccharide or derivative thereof, a precursor compound of component (B1), preferably the hydroxyalkyl-substituted species, via an alkylene group with 1 or more and 4 or less carbons which may include a hydroxyl group, a linking group [hereinafter referred to as linking group (1)].
<11> The hydrophilizing agent composition for hard surfaces according to <10>, wherein linking group (1) of component (B1) is an alkylene group with 1 or more and 4 or less carbons which may include a hydroxyl group, and preferably one or more alkylene groups selected from straight-chain alkylene groups with 1 or more and 4 or less carbons which may include a hydroxyl group and branched-chain alkylene groups with 1 or more and 4 or less carbons which may include a hydroxyl group.
<12> The hydrophilizing agent composition for hard surfaces according to <10> to <11>, wherein, when the cationic group of component (B1) is a quaternary ammonium group, the three hydrocarbon groups other than linking group (1) bonded to the quaternary ammonium group are each independently a straight-chain or branched-chain hydrocarbon group with 1 or more and 4 or less carbons, preferably a methyl group, an ethyl group, an n-propyl group, an n-butyl group, an isopropyl group, a sec-butyl group, a tert-butyl group or an isobutyl group, and more preferably a methyl group or an ethyl group.
<13> The hydrophilizing agent composition for hard surfaces according to any of <10> to <12>, wherein, when the cationic group of component (B1) is a quaternary ammonium group, the counterion of the quaternary ammonium group is one or more counterions selected from alkyl sulfate ions with 1 or more and 3 or less carbons, a sulfate ion, a phosphate ion, fatty acid ions with 1 or more and 3 or less carbons and halide ions.
<14> The hydrophilizing agent composition for hard surfaces according to any of <6> to <13>, wherein the degree of substitution by cationic group of the polysaccharide derivative having a cationic group of component (B1) is preferably 0.005 or more, more preferably 0.01 or more and further preferably 0.02 or more, and preferably 0.5 or less, more preferably 0.3 or less, further preferably 0.25 or less, furthermore preferably 0.2 or less, furthermore preferably 0.15 or less and furthermore preferably 0.1 or less.
<15> The hydrophilizing agent composition for hard surfaces according to any of <6> to <14>, wherein component (B1) is a polysaccharide derivative further having a hydrocarbon group with 1 or more and 18 or less carbons.
<16> The hydrophilizing agent composition for hard surfaces according to <15>, wherein, in component (B1), the hydrocarbon group with 1 or more and 18 or less carbons is bonded directly or via a linking group [hereinafter referred to as linking group (2)] to the polysaccharide or derivative thereof, a precursor compound of component (B1).
<17> The hydrophilizing agent composition for hard surfaces according to <16>, wherein linking group (2) is one or more groups selected from alkyleneoxy groups with 1 or more and 3 or less carbons which may have a hydroxyl group, polyoxyalkylene groups which are alkylene groups with 1 or more and 3 or less carbons, carbonyl groups, carbonyloxy groups and oxycarbonyl groups.
<18> The hydrophilizing agent composition for hard surfaces according to any of <15> to <17>, wherein the hydrocarbon group with 1 or more and 18 or less carbons is bonded directly or via linking group (2), preferably via linking group (2) to an oxygen atom left after removal of a hydrogen atom from some of or all the hydroxyl groups of the hydroxyalkyl-substituted species, a precursor compound of component (B1).
<19> The hydrophilizing agent composition for hard surfaces according to any of <15> to <18>, wherein the hydrocarbon group with 1 or more and 18 or less carbons has preferably 2 or more, further preferably 4 or more, further preferably 6 or more, furthermore preferably 8 or more and furthermore preferably 10 or more, and preferably 16 or less and more preferably 14 or less carbons.
<20> The hydrophilizing agent composition for hard surfaces according to any of <15> to <19>, wherein the degree of substitution by hydrocarbon group with 1 or more and 18 or less carbons of the polysaccharide derivative having a hydrocarbon group with 1 or more and 18 or less carbons of component (B1) is preferably 0.001 or more, more preferably 0.005 or more and further preferably 0.01 or more, and preferably 0.10 or less, more preferably 0.05 or less, further preferably 0.03 or less and furthermore preferably 0.025 or less.
<21> The hydrophilizing agent composition for hard surfaces according to any of <6> to <20>, wherein the weight average molecular weight of component (B1) is preferably 10,000 or more, more preferably 30,000 or more and further preferably 60,000 or more, and preferably 2,000,000 or less, more preferably 1,000,000 or less, further preferably 500,000 or less, furthermore preferably 350,000 or less, furthermore preferably 300,000 or less, furthermore preferably 250,000 or less, furthermore preferably 200,000 or less and furthermore preferably 150,000 or less.
<22> The hydrophilizing agent composition for hard surfaces according to any of <6> to <21>, wherein component (B2) is a copolymer including constituent unit (b1) represented by the following formula (1) and constituent unit (b2) represented by the following formula (2), wherein the molar ratio of constituent unit (b1) to constituent unit (b2), constituent unit (b1)/constituent unit (b2), is 30/70 or more and 99.9/0.1 or less, 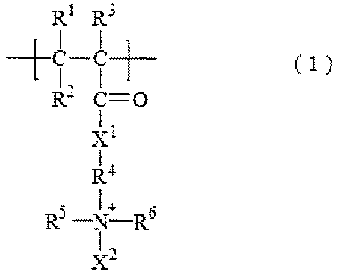 wherein
   R¹ to R³ are the same or different, and each represent a hydrogen atom or an alkyl group with 1 or 2 carbons,
   R⁴ is an alkylene group with 1 or more and 4 or less carbons or -Y¹-OPO₃⁻-Y²-,
   Y¹ and Y² are the same or different, and each represent an alkylene group with 1 or more and 4 or less carbons,
   R⁵ and R⁶ are the same or different, and each represent a hydrocarbon group with 1 or more and 4 or less carbons,
   X¹ is O or NR⁷, where R⁷ is a hydrogen atom or a hydrocarbon group with 1 or more and 4 or less carbons, and
   X² represents a hydrogen atom, a hydrocarbon group with 1 or more and 4 or less carbons, R¹⁷SO₃⁻ or R¹⁷COO⁻, provided that X² is R¹⁷SO₃⁻ or R¹⁷COO⁻ and R¹⁷ is an alkylene group with 1 or more and 4 or less carbons when R⁴ is an alkylene group with 1 or more and 4 or less carbons, and X² is a hydrogen atom or a hydrocarbon group with 1 or more and 4 or less carbons when R⁴ is -Y¹-OPO₃⁻-Y²-, 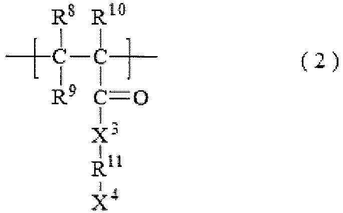 wherein
      R⁸ to R¹⁰ are the same or different, and each represent a hydrogen atom or an alkyl group with 1 or 2 carbons,
      X³ is O,
      R¹¹ is an alkylene group with 1 or more and 4 or less carbons, and
      X⁴ is N⁺R¹²R¹³R¹⁴X⁵ or NR¹⁵R¹⁶, where R¹² to R¹⁶ are the same or different and each represent a hydrogen atom or a hydrocarbon group with 1 or more and 4 or less carbons, and X⁵ represents an anion.
<23> The hydrophilizing agent composition for hard surfaces according to <22>, wherein the weight average molecular weight of component (B2) is preferably 500 or more, more preferably 5,000 or more, further preferably 10,000 or more and furthermore preferably 30,000 or more, and preferably 200,000 or less, more preferably 150,000 or less and further preferably 100,000 or less.
<24> The hydrophilizing agent composition for hard surfaces according to <22> or <23>, wherein the molar ratio of constituent unit (b1) to constituent unit (b2) in component (B2), constituent unit (b1)/constituent unit (b2), is 30/70 or more, preferably 50/50 or more, more preferably 55/45 or more, further preferably 60/40 or more, furthermore preferably 75/25 or more and furthermore preferably 90/10 or more, and 99.9/0.1 or less, preferably 98/2 or less and more preferably 96/4 or less.
<25> The hydrophilizing agent composition for hard surfaces according to any of <22> to <24>, wherein the content of constituent unit (b1) in component (B2) is preferably 30 mol% or more, more preferably 50 mol% or more, further preferably 70 mol% or more, furthermore preferably 80 mol% or more and furthermore preferably 90 mol% or more, and preferably 99 mol% or less, more preferably 98 mol% or less and further preferably 95 mol% or less.
<26> The hydrophilizing agent composition for hard surfaces according to any of <22> to <24>, wherein the content of constituent unit (b1) in component (B2) is preferably 30 mass% or more, more preferably 50 mass% or more, further preferably 70 mass% or more, furthermore preferably 80 mass% or more and furthermore preferably 90 mass% or more, and preferably 99 mass% or less, more preferably 98 mass% or less and further preferably 95 mass% or less.
<27> The hydrophilizing agent composition for hard surfaces according to any of <22> to <26>, wherein, in the formula (1), R¹ and R² each represent a hydrogen atom, R³ is preferably a hydrogen atom or a methyl group and more preferably a methyl group, X¹ is preferably O, R⁴ is preferably an alkylene group with 2 or 3 carbons and more preferably an alkylene group with 2 carbons, Y¹ and Y² each represent preferably an alkylene group with 2 or 3 carbons and more preferably an alkylene group with 2 carbons, R⁵ and R⁶ each represent preferably a methyl group or an ethyl group and more preferably a methyl group, and X², which is a hydrogen atom, a hydrocarbon group with 1 or more and 4 or less carbons, R¹⁷SO₃⁻ or R¹⁷COO⁻, is R¹⁷SO₃⁻ or COO⁻ when R⁴ is an alkylene group with 1 or more and 4 or less carbons and a hydrogen atom or a hydrocarbon group with 1 or more and 4 or less carbons when R⁴ is -Y²-OPO₃⁻-Y²-, and preferably a hydrocarbon group with 1 or more and 4 or less carbons and more preferably a methyl group when R⁴ is -Y¹-OPO₃⁻-Y²- and preferably R¹⁷SO₃⁻ when R⁴ is an alkylene group with 1 or more and 4 or less carbons, where R¹⁷ is preferably an alkylene group with 1 or more and 3 or less carbons and more preferably an alkylene group with 2 or more and 3 or less carbons.
<28> The hydrophilizing agent composition for hard surfaces according to any of <22> to <27>, wherein the content of constituent unit (b2) in component (B2) is preferably 1 mol% or more, more preferably 2 mol% or more and further preferably 5 mol% or more, and preferably 70 mol% or less, more preferably 50 mol% or less, further preferably 30 mol% or less, further preferably 20 mol% or less and further preferably 10 mol% or less.
<29> The hydrophilizing agent composition for hard surfaces according to any of <22> to <27>, wherein the content of constituent unit (b2) in component (B2) is preferably 1 mass% or more, more preferably 2 mass% or more and further preferably 5 mass% or more, and preferably 70 mass% or less, more preferably 50 mass% or less, further preferably 30 mass% or less, furthermore preferably 20 mass% or less and furthermore preferably 10 mass% or less.
<30> The hydrophilizing agent composition for hard surfaces according to any of <22> to <29>, wherein, in the formula (2), R⁸ and R⁹ each represent preferably a hydrogen atom, R¹⁰ is preferably a hydrogen atom or a methyl group and more preferably a methyl group, X³ is preferably O, R¹¹ is preferably an alkylene group with 2 or 3 carbons and more preferably an alkylene group with 2 carbons, and X⁴ is N⁺R¹²R¹³R¹⁴X⁵ or NR¹⁵R¹⁶ and preferably N⁺R¹²R¹³R¹⁴X⁵, where R¹², R¹³ and R¹⁴ each represent preferably a methyl group or an ethyl group, R¹⁵ and R¹⁶ each represent preferably a methyl group or an ethyl group and preferably a methyl group, and X⁵ is preferably a halogen ion or C₂H₅SO₄⁻ and more preferably C₂H₅SO₄⁻.
<31> The hydrophilizing agent composition for hard surfaces according to any of <22> to <30>, wherein the total content of constituent units (b1) and (b2) in component (B2) is preferably 90 mol% or more, more preferably 95 mol% or more, further preferably 99 mol% or more, furthermore preferably 99.5 mol% or more, furthermore preferably 99.9 mol% or more and furthermore preferably 100 mol%.
<32> The hydrophilizing agent composition for hard surfaces according to any of <22> to <30>, wherein the total content of constituent units (b1) and (b2) in component (B2) is preferably 90 mass% or more, more preferably 95 mass% or more, further preferably 99 mass% or more, furthermore preferably 99.5 mass% or more, furthermore preferably 99.9 mass% or more and furthermore preferably 100 mass%.
<33> The hydrophilizing agent composition for hard surfaces according to any of <1> to <32>, containing component (A) in an amount of preferably 0.1 mass% or more, more preferably 0.5 mass% or more, further preferably 1 mass% or more and furthermore preferably 1.5 mass% or more, and preferably 60 mass% or less, more preferably 40 mass% or less, further preferably 20 mass% or less, furthermore preferably 10 mass% or less, furthermore preferably 5 mass% or less, furthermore preferably 4 mass% or less and furthermore preferably 3 mass% or less.
<34> The hydrophilizing agent composition for hard surfaces according to any of <1> to <33>, containing component (B) in an amount of preferably 0.002 mass% or more, more preferably 0.01 mass% or more, further preferably 0.02 mass% or more and furthermore preferably 0.1 mass% or more, and preferably 6 mass% or less, more preferably 4 mass% or less, further preferably 2 mass% or less, furthermore preferably 1 mass% or less and furthermore preferably 0.5 mass% or less.
<35> The hydrophilizing agent composition for hard surfaces according to any of <1> to <34>, wherein the mass ratio of the content of component (A) to the content of component (B), (A)/(B), is preferably 1 or more, more preferably 2 or more, further preferably 3 or more, further preferably 5 or more, furthermore preferably 7 or more and furthermore preferably 9 or more, and preferably 100 or less, more preferably 75 or less, further preferably 50 or less, furthermore preferably 45 or less, furthermore preferably 25 or less, furthermore preferably 20 or less, furthermore preferably 15 or less and furthermore preferably 12 or less.
<36> The hydrophilizing agent composition for hard surfaces according to any of <1> to <35>, further containing one or more selected from surfactants other than component (A), chelating agents, alkali agents, enzymes, inorganic salts, disinfectants and fragrances.
<37> The hydrophilizing agent composition for hard surfaces according to any of <1> to <36>, wherein the proportion of component (A) in internal olefin sulfonates with 12 or more and 22 or less carbons is preferably 20 mass% or more, more preferably 40 mass% or more, further preferably 50 mass% or more, furthermore preferably 60 mass% or more, furthermore preferably 70 mass% or more, furthermore preferably 80 mass% or more and furthermore preferably 90 mass% or more, and preferably 100 mass% or less and more preferably 100 mass%.
<38> The hydrophilizing agent composition for hard surfaces according to any of <1> to <37>, wherein the proportion of component (A) in all surfactants is preferably 20 mass% or more, more preferably 40 mass% or more, further preferably 50 mass% or more, furthermore preferably 60 mass% or more, furthermore preferably 70 mass% or more, furthermore preferably 80 mass% or more and furthermore preferably 90 mass% or more, and preferably 100 mass% or less and more preferably 100 mass%.
<39> The hydrophilizing agent composition for hard surfaces according to any of <1> to <38>, containing water in an amount of 20 mass% or more and further 30 mass% or more, and 99 mass% or less and further 98 mass% or less.
<40> The hydrophilizing agent composition for hard surfaces according to any of <1> to <39>, wherein the pH of the composition at 20°C is preferably 2 or more and more preferably 3 or more, and preferably 12 or less and more preferably 11 or less.
<41> The hydrophilizing agent composition for hard surfaces according to any of <1> to <40>, wherein the viscosity of the composition at 20°C is preferably 1 mPa·s or more and more preferably 5 mPa·s or more, and preferably 20,000 mPa·s or less and more preferably 10,000 mPa·s or less.
<42> The hydrophilizing agent composition for hard surfaces according to any of <1> to <41>, wherein a target hard surface is a hard surface made of one or more materials selected from plastic, ceramic, metal, wood, glass, rubber and carbon materials.
<43> The hydrophilizing agent composition for hard surfaces according to <42>, wherein the plastic is one or more selected from acrylic resin, polyamide, polycarbonate, melamine, polyvinyl chloride, polyester, polystyrene, polyethylene, polypropylene, ABS and FRP (fiber reinforced plastic), the metal is one or more selected from alloys such as stainless steel or the like, aluminum and irons such as automotive steel or the like, the rubber is one or more selected from natural rubber and diene synthetic rubber, and the wood is lumber.
<44> A method for hydrophilizing a hard surface including bringing a treatment liquid into contact with the hard surface, the treatment liquid containing, (A) an internal olefin sulfonate with 18 carbons (hereinafter referred to as component (A)), (B) a polymer having a cationic group (hereinafter referred to as component (B)) and water.
<45> The method for hydrophilizing a hard surface according to <44>, wherein the treatment liquid is obtained by mixing the hydrophilizing agent composition for hard surfaces according to any of <1> to <43> with water.
<46> The method for hydrophilizing a hard surface according to <44> or <45>, wherein the hardness of the water is preferably 2°dH or more, more preferably 4°dH or more and further preferably 6°dH or more, and preferably 100°dH or less, more preferably 50°dH or less, further preferably 30°dH or less, furthermore preferably 20°dH or less, furthermore preferably 15°dH or less and furthermore preferably 10°dH or less.
<47> The method for hydrophilizing a hard surface according to any of <44> to <46>, wherein the treatment liquid contains component (A) in an amount of preferably 0.001 mass% or more, more preferably 0.005 mass% or more and further preferably 0.01 mass% or more, and preferably 5 mass% or less, more preferably 3 mass% or less and further preferably 1 mass% or less.
<48> The method for hydrophilizing a hard surface according to any of <44> to <47>, wherein the treatment liquid contains component (B) in an amount of preferably 0.00002 mass% or more, more preferably 0.00005 mass% or more and further preferably 0.0002 mass% or more, and preferably 0.5 mass% or less, more preferably 0.3 mass% or less and further preferably 0.1 mass% or less.
<49> The method for hydrophilizing a hard surface according to any of <44> to <48>, wherein the mass ratio of the content of component (A) to the content of component (B) in the treatment liquid, (A)/(B), is preferably 1 or more, more preferably 2 or more, further preferably 3 or more, further preferably 5 or more, furthermore preferably 7 or more and furthermore preferably 9 or more, and preferably 100 or less, more preferably 75 or less, further preferably 50 or less, furthermore preferably 45 or less, furthermore preferably 25 or less, furthermore preferably 20 or less, furthermore preferably 15 or less and furthermore preferably 12 or less.
<50> The method for hydrophilizing a hard surface according to any of <44> to <49>, wherein the proportion of component (A) in internal olefin sulfonates with 12 or more and 22 or less carbons in the treatment liquid is preferably 20 mass% or more, more preferably 40 mass% or more, further preferably 50 mass% or more, furthermore preferably 60 mass% or more, furthermore preferably 70 mass% or more, furthermore preferably 80 mass% or more and furthermore preferably 90 mass% or more, and preferably 100 mass% or less and more preferably 100 mass%.
<51> The method for hydrophilizing a hard surface according to any of <44> to <50>, wherein the proportion of component (A) in all surfactants in the treatment liquid is preferably 20 mass% or more, more preferably 40 mass% or more, further preferably 50 mass% or more, furthermore preferably 60 mass% or more, furthermore preferably 70 mass% or more, furthermore preferably 80 mass% or more and furthermore preferably 90 mass% or more, and preferably 100 mass% or less and more preferably 100 mass%.
<52> The method for hydrophilizing a hard surface according to any of <44> to <51>, wherein the treatment liquid is brought into contact with the hard surface for preferably 0.1 seconds or more, more preferably 0.5 seconds or more and further preferably 1 second or more, and preferably 90 minutes or less, more preferably 60 minutes or less and further preferably 30 minutes or less.
<53> The method for hydrophilizing a hard surface according to any of <44> to <52>, wherein the temperature of the treatment liquid is preferably 5°C or more, more preferably 10°C or more and more preferably 15°C or more, and preferably 95°C or less, more preferably 90°C or less and more preferably 80°C or less.
<54> The method for hydrophilizing a hard surface according to any of <44> to <53>, including, after bringing the treatment liquid into contact with the hard surface, rubbing the hard surface.
<55> The method for hydrophilizing a hard surface according to any of <44> to <53>, including, after bringing the treatment liquid into contact with the hard surface, leaving the hard surface standing for preferably 10 seconds or more, more preferably 1 minute or more and further preferably 2 minutes or more, and preferably 30 minutes or less, more preferably 15 minutes or less and further preferably 10 minutes or less.
<56> The method for hydrophilizing a hard surface according to any of <44> to <55>, including, after bringing the treatment liquid into contact with the hard surface, and preferably, thereafter leaving the hard surface standing in the above manner, rinsing the hard surface with water.
<57> The method for hydrophilizing a hard surface according to any of <44> to <56>, wherein a method for bringing the treatment liquid into contact with the hard surface is any method of the following (i) to (iii):
   (i) a method of immersing a hard article in the treatment liquid;
   (ii) a method of spraying or applying the treatment liquid to the hard surface; and
   (iii) a method of hydrophilizing the hard surface in the usual manner with the treatment liquid.
<58> A method for maintaining hydrophilicity of a hard surface including bringing a treatment liquid into contact with the hard surface, the treatment liquid containing, (A) an internal olefin sulfonate with 18 carbons (hereinafter referred to as component (A)), (B) a polymer having a cationic group (hereinafter referred to as component (B)) and water.
<59> The method for maintaining hydrophilicity of a hard surface, wherein the treatment liquid is obtained by mixing the hydrophilizing agent composition for hard surfaces according to any of <1> to <43> with water.

### Examples

The following were used as the components in the tables.

### <Component (A)>

### [Production example 1] (production of C18-IOS-K)

An internal olefin sulfonate potassium salt with 18 carbons (C18-IOS-K) can be obtained, for example, in accordance with the following production example.

7000 parts by mass of 1-octadecanol ("KALCOL 8098" manufactured by Kao Corporation) and 700 parts by mass of γ-alumina (manufactured by Strem Chemicals, Inc.) as a catalyst can be charged into a flask with a stirrer, and reacted under stirring at 280°C with nitrogen flowing through the system, thereby obtaining a crude internal olefin. The crude internal olefin can be distilled at 148-158°C and at 0.5 mmHg, thereby obtaining an internal olefin with 18 carbons having an olefin purity of 100%. The internal olefin is placed in a thin-film sulfonation reactor, in which a sulfonation reaction is carried out with a sulfur trioxide gas having an SO₃ concentration of 2.8 volume% under conditions where cooling water at 20°C passes through the outer jacket of the reactor. The reaction is carried out with the flowing amounts of the internal olefin and SO₃ set such that the reaction molar ratio of SO₃ to the internal olefin is 1.09. The obtained sulfonated product is added to an aqueous potassium hydroxide solution in an amount equivalent to 1.2 molar times the theoretical acid value, and neutralized with stirring at 30°C for 1 hour. The neutralized product can be hydrolyzed by heating in an autoclave at 160°C for 1 hour, thereby obtaining a crude product of the internal olefin sulfonate potassium salt. The crude product and ethanol are placed in a separatory funnel, and petroleum ether is added thereto, thereby extracting and removing oil-soluble impurities. This operation can be carried out three times, and the water phase side can be evaporated to dryness, thereby obtaining the internal olefin sulfonate potassium salt with 18 carbons (C18-IOS-K).

Note that the formulation amounts of component (A) shown in the tables are values calculated under the assumption that component (A) is in acid form (C18-IOS-H) .

### <Component (A') (comparative component for component (A))>

### · SLS: sodium lauryl sulfate, EMAL 2F-30, manufactured by Kao Corporation

### [Production Example 2] (Production of C16-IOS-K)

An internal olefin sulfonate potassium salt with 16 carbons (C16-IOS-K) can be obtained, for example, in accordance with the following production example.

7000 parts by mass of 1-hexadecanol ("KALCOL 6098" manufactured by Kao Corporation) and 700 parts by mass of γ-alumina (manufactured by Strem Chemicals, Inc.) as a catalyst can be charged into a flask with a stirrer, and reacted under stirring at 280°C with nitrogen flowing through the system, thereby obtaining a crude internal olefin. The crude internal olefin can be distilled at 148-158°C and at 0.5 mmHg, thereby obtaining an internal olefin with 16 carbons having an olefin purity of 100%. The internal olefin is placed in a thin-film sulfonation reactor, in which a sulfonation reaction is carried out with a sulfur trioxide gas having an SO₃ concentration of 2.8 volume% under conditions where cooling water at 20°C passes through the outer jacket of the reactor. The reaction is carried out with the flowing amounts of the internal olefin and SO₃ set such that the reaction molar ratio of SO₃ to the internal olefin is 1.09. The obtained sulfonated product is added to an aqueous potassium hydroxide solution in an amount equivalent to 1.2 molar times the theoretical acid value, and neutralized with stirring at 30°C for 1 hour. The neutralized product can be hydrolyzed by heating in an autoclave at 160°C for 1 hour, thereby obtaining a crude product of the internal olefin sulfonate potassium salt. The crude product and ethanol are placed in a separatory funnel, and petroleum ether is added thereto, thereby extracting and removing oil-soluble impurities. This operation can be carried out three times, and the water phase side can be evaporated to dryness, thereby obtaining the internal olefin sulfonate potassium salt with 16 carbons (C16-IOS-K).

Note that the formulation amounts of component (A') shown in the tables are values calculated under the assumption that component (A') is in acid form (C16-IOS-H) .

### <Component (B)>

### Component (B1)

### [Production example 3] (synthesis of LC-HEC-1)

90 g of hydroxyethyl cellulose (Ashland Inc., Natrosol 250 JR, weight average molecular weight: 150,000, degree of substitution by hydroxyethyl group (MS): 2.5) was placed in a 1-L separable flask, and nitrogen flow was carried out. 72.3 g of ion exchange water and 400.3 g of isopropyl alcohol (hereinafter referred to as IPA) were added and stirred for 5 minutes, and then, 10.5 g of a 48% aqueous sodium hydroxide solution was added and further stirred for 15 minutes. Next, 3.65 g of lauryl glycidyl ether (Yokkaichi Chemical Company Limited, hereinafter referred to as LA-EP) was added, and an alkylation reaction was carried out at 80°C for 13 hours. Further, 2.55 g of glycidyl trimethylammonium chloride (Sakamoto Yakuhin Kogyo Co., Ltd., hereinafter referred to as SY-GTA80) was added, and a cationization reaction was carried out at 50°C for 1.5 hours. Then, 10.5 g of a 90% aqueous acetic acid solution was added and stirred for 30 minutes, thereby carrying out a neutralization reaction.

The obtained suspension was transferred equally to two 500-mL centrifuge tubes, and subjected to centrifugation with a high speed refrigerated centrifuge (Hitachi Koki Co., Ltd., CR21G III). The supernatant was removed by decantation, an 85% aqueous IPA solution in the same amount as that of the removed supernatant was added, and redispersion was carried out. Again, the centrifugation and redispersion operations were repeated, and after the third centrifugation was carried out, the precipitate was taken out. The obtained precipitate was dried under reduced pressure with a vacuum drier (ADVANTEC MFS, INC., VR-420) at 80°C overnight, and crushed with an extreme mill (Waring Commercial, MX-1200XTM), thereby obtaining LC-HEC-1 as a powdery cellulose derivative composition. The obtained LC-HEC-1 had a molecular weight of 150,000, a degree of substitution by lauryl group of 0.019 and a degree of substitution by cationic group of 0.02.

### [Production example 4] (synthesis of LC-HEC-2)

Cellulose derivative LC-HEC-2 was synthesized in the same manner as in example 1 except that the preparation amounts of LA-EP and SY-GTA80 were changed to 3.70 g and 17.7 g, respectively. The obtained LC-HEC-2 had a molecular weight of 150,000, a degree of substitution by alkyl group of 0.021 and a degree of substitution by cationic group of 0.13.

### [Production example 5] (synthesis of LC-HEC-3)

Cellulose derivative LC-HEC-3 was synthesized in the same manner as in example 1 except that the preparation amounts of LA-EP and SY-GTA80 were changed to 4.38 g and 14.6 g, respectively. The obtained LC-HEC-3 had a molecular weight of 150,000, a degree of substitution by alkyl group of 0.023 and a degree of substitution by cationic group of 0.10.

### [Production example 6] (synthesis of LC-HEC-4)

Cellulose derivative LC-HEC-4 was synthesized in the same manner as in example 1 except that the hydroxyethyl cellulose was changed to another hydroxyethyl cellulose (HEC) (Ashland Inc., Natrosol 250 LR, weight average molecular weight: 90,000, degree of substitution by hydroxyethyl group: 2.5), and the preparation amounts of LA-EP and SY-GTA80 were changed to 2.62 g and 4.3 g, respectively. The obtained LC-HEC-4 had a molecular weight of 90,000, a degree of substitution by alkyl group of 0.016 and a degree of substitution by cationic group of 0.03.

### [Production example 7] (synthesis of LC-HEC-5)

Cellulose derivative LC-HEC-5 was synthesized in the same manner as in example 1 except that the hydroxyethyl cellulose was changed to another hydroxyethyl cellulose (HEC) (Ashland Inc., Natrosol 250 GR, weight average molecular weight: 300,000, degree of substitution by hydroxyethyl group: 2.5). The obtained LC-HEC-5 had a molecular weight of 300,000, a degree of substitution by alkyl group of 0.02 and a degree of substitution by cationic group of 0.02.

### [Production example 8] (synthesis of C-HEC-1)

Cellulose derivative C-HEC-1 was synthesized in the same manner as in example 1 except that the hydroxyethyl cellulose was changed to another hydroxyethyl cellulose (HEC) (Ashland Inc., Natrosol 250 GR, weight average molecular weight: 300,000, degree of substitution by hydroxyethyl group: 2.5), and the preparation amount of SY-GTA80 was changed to 7.6 g and LA-EP was not added. The obtained C-HEC-1 had a molecular weight of 300,000 and a degree of substitution by cationic group of 0.06.

### [Production example 9] (synthesis of C-HEC-2)

Cellulose derivative C-HEC-2 was synthesized in the same manner as in example 1 except that the hydroxyethyl cellulose was changed to another hydroxyethyl cellulose (HEC) (Ashland Inc., Natrosol 250 GR, weight average molecular weight: 300,000, degree of substitution by hydroxyethyl group: 2.5), and the preparation amount of SY-GTA80 was changed to 18.0 g and LA-EP was not added. The obtained C-HEC-2 had a molecular weight of 300,000 and a degree of substitution by cationic group of 0.14.

### [Production example 10] (synthesis of C-HEC-3)

Cellulose derivative C-HEC-3 was synthesized in the same manner as in example 1 except that the hydroxyethyl cellulose was changed to another hydroxyethyl cellulose (HEC) (Ashland Inc., Natrosol 250 GR, weight average molecular weight: 300,000, degree of substitution by hydroxyethyl group: 2.5), and the preparation amount of SY-GTA80 was changed to 38.0 g and LA-EP was not added. The obtained C-HEC-3 had a molecular weight of 300,000 and a degree of substitution by cationic group of 0.28.

### · C-HEC-4: hydroxyethyl cellulose hydroxypropyl trimethylammonium chloride ether, POIZ C-60H, manufactured by Kao Corporation

### · C-HPC

a cationized hydroxypropyl cellulose, SOFCARE C-HP2-W, manufactured by Kao Corporation

### · Polyquart Eco: a hydrophilized starch having a cationic group, manufactured by BASF

The degrees of substitution and the weight average molecular weight of component (B1) were measured in the following manner.

### (1) Measurement of degrees of substitution

### · Pretreatment of polysaccharide derivative

1 g of a polysaccharide derivative of component (B1) was dissolved in 100 g of water, and then, the aqueous solution was put in a dialysis membrane (Spectra/Por, molecular weight cut-off 1,000) and underwent dialysis for 2 days. The obtained aqueous solution was freeze-dried with a freeze drier (EYELA, FDU1100), thereby obtaining a pretreated polysaccharide derivative.

### · Calculation of mass of cationic group by the Kjeldahl method

200 mg of the polysaccharide derivative pretreated in the above manner was precisely weighed, 10 mL of concentrated sulfuric acid and one Kjeldahl tablet (Merck) were added, and thermal decomposition was carried out with a Kjeldahl digestor (manufactured by BUCHI Corporation, K-432). After the decomposition was ended, 30 mL of ion exchange water was added to the sample, and the nitrogen content of the sample (mass%) was determined with an automatic Kjeldahl steam distillation unit (manufactured by BUCHI Corporation, K-370) to give the mass of the cationic group.

### · Calculation of mass of hydrocarbon group (alkyl group) by The Zeisel determination

200 mg of the polysaccharide derivative pretreated in the above manner and 220 mg of azipic acid were precisely weighed in a 10-mL vial (Mighty Vial No. 3), 3 mL of an internal standard solution (tetradecane/o-xylene = 1/25 (v/v)) and 3 mL of hydroiodic acid were added, and the vial was stoppered tightly. Further, a sample for a calibration curve in which 2.4 mg or 9 mg of 1-iodododecane was added instead of the polysaccharide derivative was prepared. Each sample was heated while stirred with a stirrer tip using a block heater (manufactured by Pierce Corporation, Reacti-Therm III Heating/stirring module) under the conditions of 160°C and 2 hours. After the sample was left standing to be cooled, the upper layer (o-xylene layer) was collected and analyzed by gas chromatography (GC) (SHIMADZU CORPORATION, QD2010plus) under the following conditions.

### · GC analysis conditions

Column: Agilent HP-1 (length: 30 m, liquid phase film thickness: 0.25 µL, inner diameter: 32 mm)
Split ratio: 20
Column temperature: 100°C (2 min) -> 10°C/min -> 300°C (15 min)
Injector temperature: 300°C
Detector: HID
Detector temperature: 330°C
Injection volume: 2 µL

The mass of the alkyl group in the sample was determined from the detection amount of 1-iodododecane obtained by GC.

### · Measurement of mass of hydroxyalkyl group

The measurement was carried out by quantifying an alkyl iodide derived from a hydroxyalkyl group in the same manner as in the above measurement of the mass of the alkyl group.

### · Calculation of degrees of substitution by cationic group and alkyl group

The degrees of substitution by cationic group and alkyl group were given as molar averages by calculating the mass of the backbone of the polysaccharide derivative from the mass of the cationic group, the mass of the alkyl group and the total mass of the sample and converting them to the amounts of substance (mol).

### · Measurement of weight average molecular weight

The weight average molecular weight of component (B1) was given in terms of that of polyethylene glycol by GPC (gel permeation chromatography).

The measurement conditions are as follows.
- Column: TSKgel α-M
- Eluent: 50 mmol/L LiBr, 1% CH₃COOH, ethanol/water = 3/7
- Temperature: 40°C
- Flow rate: 0.6 mL/min

### Component (B2)

### [Production example 10] (synthesis of polymer (B))

### (Step 1)

126.30 g of ethanol (manufactured by Wako Pure Chemical Industries, Ltd.) was placed in a four-necked flask with an inner capacity of 1000 mL, and the temperature was raised to 78°C and reflux was carried out. A solution obtained by mixing 181.12 g of 2-(dimethylamino)ethyl methacrylate (manufactured by Wako Pure Chemical Industries, Ltd.), 23.60 g of 2-(dimethylamino)ethyl methacrylate diethyl sulfate (manufactured by Kao Corporation/90% aqueous solution) and 53.20 g of ethanol, and a solution obtained by mixing 5.83 g of 2,2'-azobis(2-methylbutyronitrile) (manufactured by Wako Pure Chemical Industries, Ltd.) and 10.00 g of ethanol were each added dropwise thereto for 2 hours. After aged for 4 hours, the solution was cooled to obtain a polymer solution.

### (Step 2)

94.70 g of the obtained polymer solution, 3.15 g of sodium bicarbonate (manufactured by Wako Pure Chemical Industries, Ltd.) and 150.00 g of water were added to a four-necked flask with an inner capacity of 1000 mL, and the temperature was raised to 50°C. 38.70 g of 1,3-propanesultone (manufactured by Tokyo Chemical Industry Co., Ltd.) was added dropwise thereto for 1 hour to carry out a reaction. After aged for 3 hours, the solution was heated under reduced pressure at 90°C/20 kPa for 2 hours to evaporate ethanol, thereby obtaining an aqueous solution containing polymer (B).

In polymer (B), constituent unit (b1) has the following structures in the formula (1), constituent unit (b2) has the following structures in the formula (2), and the molar ratio of constituent unit (b1) to constituent unit (b2) is 95/5.
Constituent unit (b1): R¹ = R² = H, R³ = CH₃, R⁴ = C₂H₄, R⁵ = R⁶ = CH₃, X¹ = O, X² = R¹⁷SO₃⁻ and R¹⁷ = C₃H₆
Constituent unit (b2): R⁸ = R⁹ = H, R¹⁰ = CH₃, X³ = 0, R¹¹ = C₂H₄, X⁴ = N⁺R¹²R¹³R¹⁴X⁵, R¹² = R¹³ = CH₃, R¹⁴ = C₂H₅ and X⁵ = C₂H₅SO₄⁻
Further, polymer (B) had a weight average molecular weight of 63,000.

Note that the weight average molecular weight of polymer (B) was measured by gel permeation chromatography (pullulan) under the following conditions.
Column: two TSKgel α-M columns (manufactured by Tosoh Corporation) connected in series were used
Column temperature: 40°C
Eluent: 0.15 mol Na₂SO₄/1% CH₃COOH/water
Flow rate: 1.0 ml/min
Detector: differential refractometer

### · Polyquart 149A: an acrylic acid polymer having a cationic group, manufactured by BASF

### <Component (B') (comparative component for component (B))>

### · Luviskol K90: polyvinylpyrrolidone, manufactured by BASF

### <Preparation of hydrophilizing agent composition for hard surfaces>

The hydrophilizing agent compositions for hard surfaces shown in Tables 1 to 5 were prepared by using the above formulation components, and evaluated for the items below. The results are shown in Tables 1 to 5.

Specifically, the hydrophilizing agent compositions for hard surfaces shown in Tables 1 to 5 were prepared in the following manner. A Teflon^{®} stirrer piece with a length of 5 cm was put in a glass beaker with a capacity of 200 mL, and the mass was measured. Next, component (B) was put in ion exchange water at 20°C, and the top of the beaker was sealed with Saran Wrap^{®}.

The beaker having the contents therein was placed in a water bath at 60°C set on a magnetic stirrer, and after the contents were stirred at 100 r/min for 30 minutes with the temperature of water in the water bath falling within the temperature range of 60 ± 2°C, component (A) was added and further stirred for 30 minutes. Next, water in the water bath was replaced with tap water at 5°C, and the composition in the beaker was cooled until the temperature thereof reached 20°C. Next, Saran Wrap^{®} was removed, and ion exchange water was added such that the mass of the contents reached 100 g and stirred at 100 r/min for 30 seconds again, thus obtaining the hydrophilizing agent compositions for hard surfaces shown in Tables 1 to 5.

### <Treatment for hydrophilization evaluation and method for measuring contact angle>

5 g of a hydrophilizing agent composition for hard surfaces shown in Tables 1 to 5 was mixed with 495 g of water having a hardness shown in Tables 1 to 5 using polypropylene Tupperware with a capacity of 0.85 L (manufactured by ASVEL Co. Ltd.), thereby obtaining a treatment liquid. With the treatment temperature kept constant at 25°C, the solution was mixed with a bioshaker at a stirring rate of 70 rpm for 15 minutes. Next, a plate (26 mm × 76 mm) made of a material shown in the tables was added and stirred at a stirring rate of 70 rpm for 15 minutes. After stirring, the cleaning water in the Tupperware was discarded and 0.5 L of water having a hardness shown in Tables 1 to 5 was added to the Tupperware for rinsing, and the plate was rinsed by stirring at a stirring rate of 70 rpm for 1 minute. After rinsed four times, the plate subjected to the hydrophilization treatment was dried overnight at a room temperature.

The contact angle of water on the dried plate was measured with an automatic contact angle meter (DM-501Hi). The values in Tables 1 to 5 are the average values of contact angles at three points. Note that, before the hydrophilization treatment, the contact angle of glass is 32.9°, that of polyester is 85.8°, that of ceramic is 47.1°, that of polyethylene is 88°, and that of polypropylene is 92.1°. Further, the relative value (%) of the contact angle after the hydrophilization treatment to the contact angle before the hydrophilization treatment is shown. The smaller the value is, the more hydrophilized the material is.

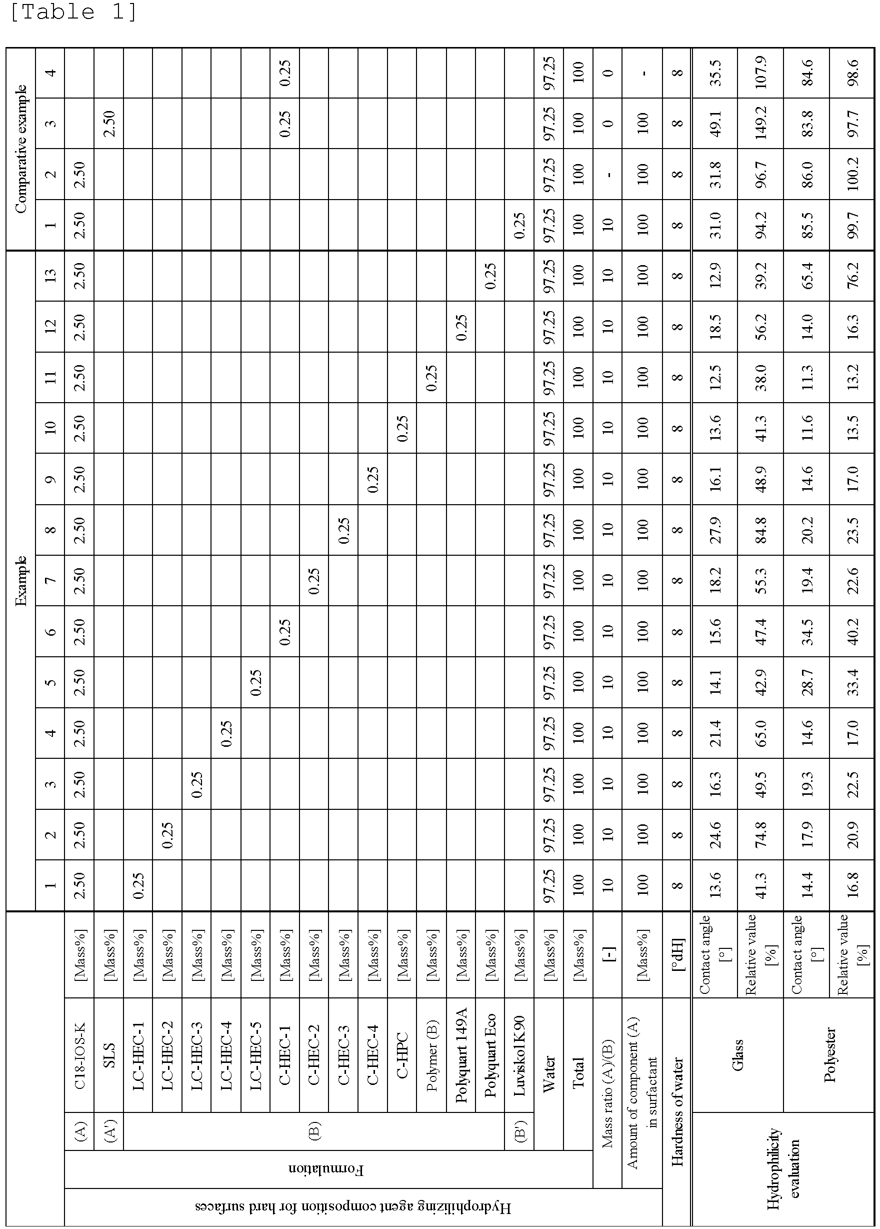

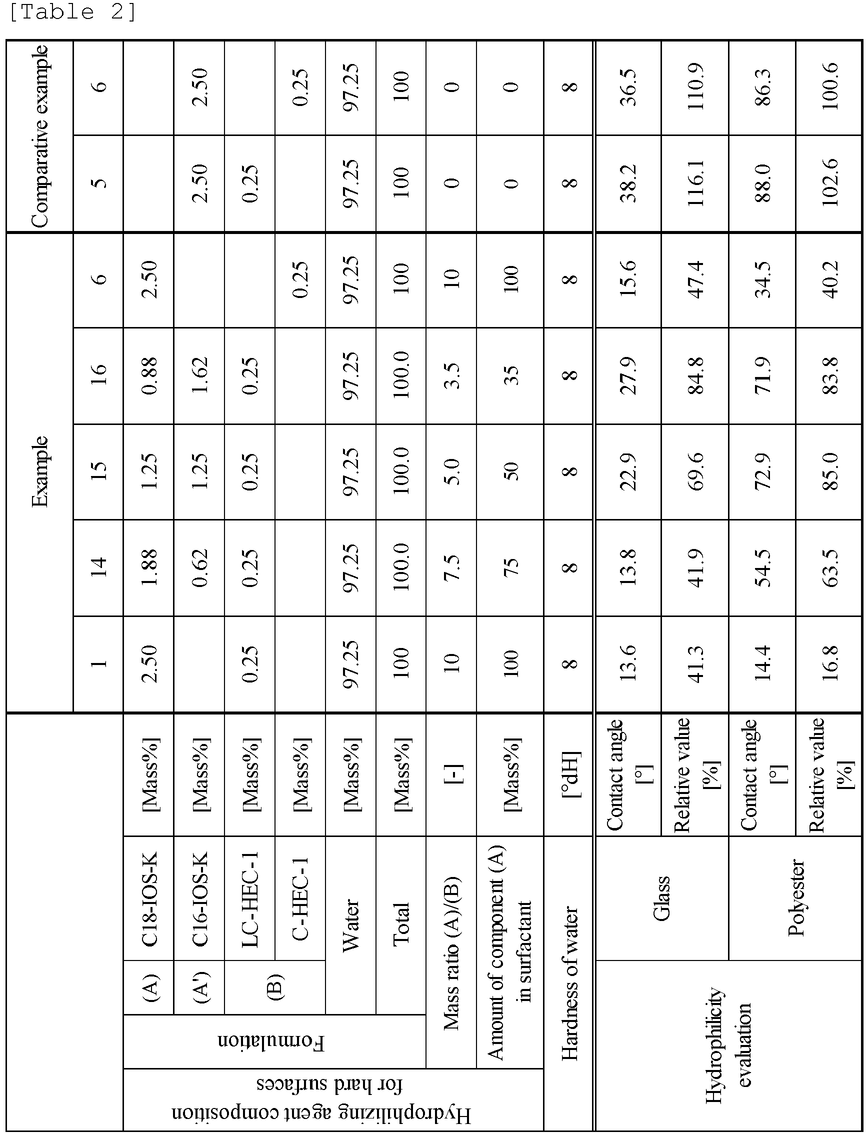

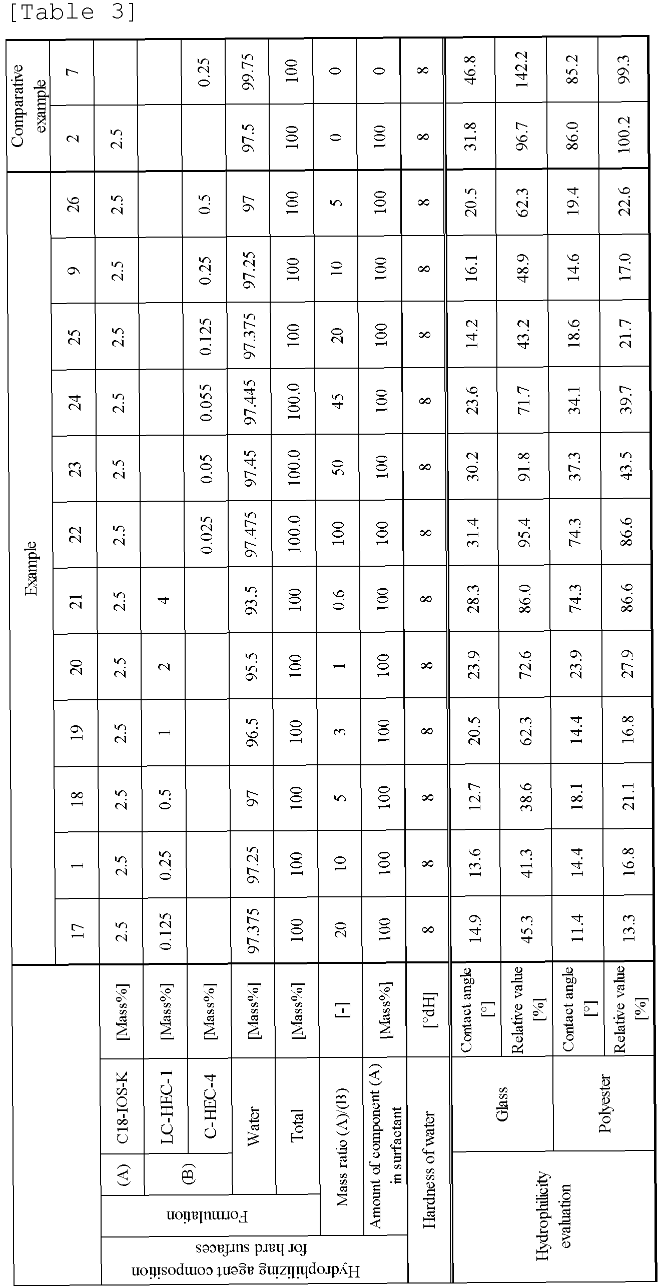

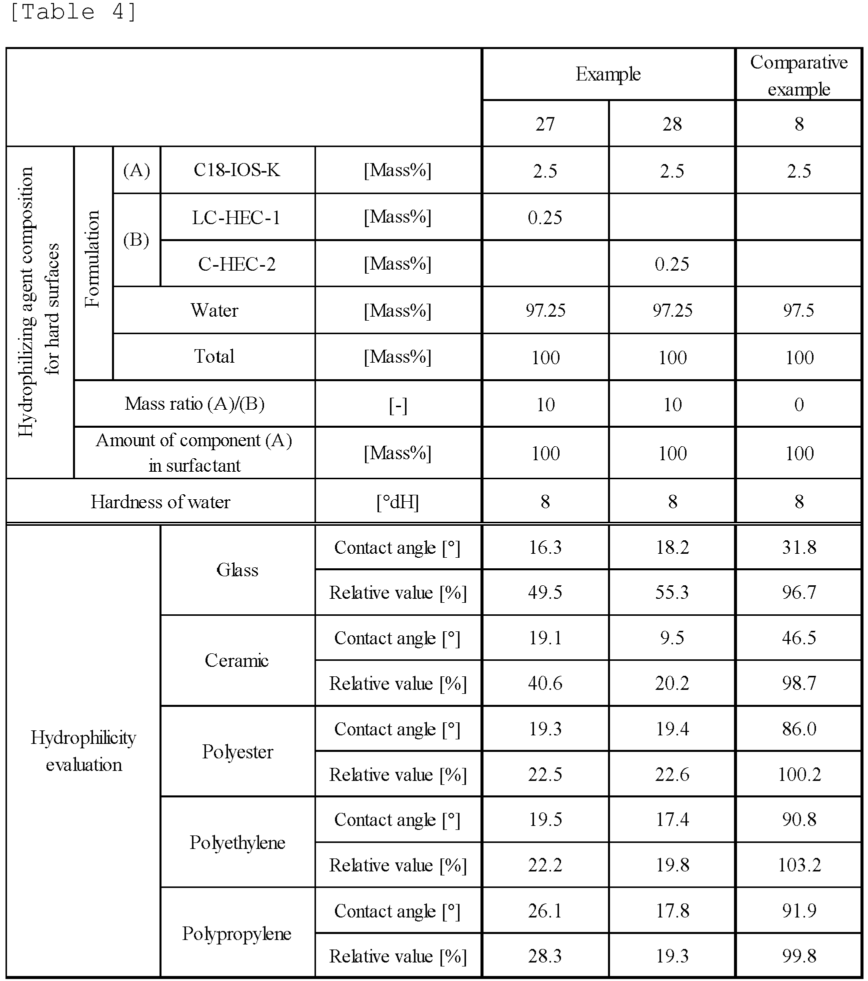

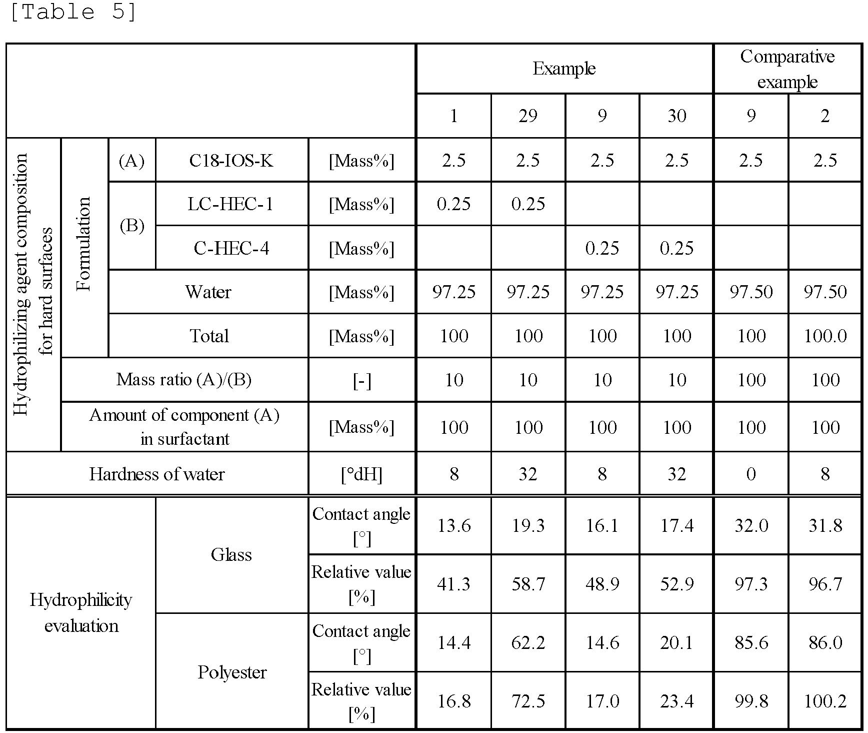

## Claims

1. A hydrophilizing agent composition for hard surfaces comprising, (A) an internal olefin sulfonate with 18 carbons (hereinafter referred to as component (A)), (B) a polymer having a cationic group (hereinafter referred to as component (B)) and water.

2. The hydrophilizing agent composition for hard surfaces according to claim 1, wherein the component (B) is one or more selected from a polysaccharide derivative having a cationic group and an acrylic acid polymer having a cationic group.

3. The hydrophilizing agent composition for hard surfaces according to claim 1 or 2, wherein the component (B) is a polysaccharide derivative having a cationic group.

4. The hydrophilizing agent composition for hard surfaces according to any one of claims 1 to 3, wherein a mass ratio of the content of the component (A) to the content of the component (B), (A)/(B), is 1 or more and 50 or less.

5. The hydrophilizing agent composition for hard surfaces according to any one of claims 1 to 4, wherein a proportion of the component (A) in all surfactants is 40 mass% or more and 100 mass% or less.

6. The hydrophilizing agent composition for hard surfaces according to any one of claims 1 to 5, wherein a target hard surface is a hard surface made of one or more materials selected from plastic, ceramic, metal, wood, glass, rubber and carbon materials.

7. The hydrophilizing agent composition for hard surfaces according to any one of claims 1 to 5, wherein a target hard surface is a hard surface made of one or more materials selected from polyester, polyethylene, polypropylene, ceramic and glass.

8. A method for hydrophilizing a hard surface comprising bringing a treatment liquid into contact with the hard surface, the treatment liquid comprising, (A) an internal olefin sulfonate with 18 carbons (hereinafter referred to as component (A)), (B) a polymer having a cationic group (hereinafter referred to as component (B)) and water.

9. The method for hydrophilizing a hard surface according to claim 8, wherein the hardness of water is 2°dH or more and 50°dH or less.

10. The method for hydrophilizing a hard surface according to claim 8 or 9, comprising, after bringing the treatment liquid into contact with the hard surface, rinsing the hard surface with water.

11. The method for hydrophilizing a hard surface according to any one of claims 8 to 10, wherein the treatment liquid is obtained by mixing the hydrophilizing agent composition for hard surfaces according to any one of claims 1 to 5 with water.

12. The method for hydrophilizing a hard surface according to any one of claims 8 to 11, wherein the hard surface is a hard surface made of one or more materials selected from plastic, ceramic, metal, wood, glass, rubber and carbon materials.

13. The method for hydrophilizing a hard surface according to any one of claims 8 to 11, wherein the hard surface is a hard surface made of one or more materials selected from polyester, polyethylene, polypropylene, ceramic and glass.

14. A method for maintaining hydrophilicity of a hard surface comprising bringing a treatment liquid into contact with the hard surface, the treatment liquid comprising, (A) an internal olefin sulfonate with 18 carbons (hereinafter referred to as component (A)), (B) a polymer having a cationic group (hereinafter referred to as component (B)) and water.

15. The method for maintaining hydrophilicity of a hard surface according to claim 14, wherein the hard surface is a hard surface made of one or more materials selected from plastic, ceramic, metal, wood, glass, rubber and carbon materials.

16. The method for maintaining hydrophilicity of a hard surface according to claim 14, wherein the hard surface is a hard surface made of one or more materials selected from polyester, polyethylene, polypropylene, ceramic and glass.
